**Europäisches Patentamt**

(19) **European Patent Office**

**Office européen des brevets**

(11) Publication number : **0 515 461 B1**

# (12) EUROPEAN PATENT SPECIFICATION

(45) Date of publication of patent specification :
**03.05.95 Bulletin 95/18**

(51) Int. Cl.⁶ : **H04Q 9/00**

(21) Application number : **91904003.0**

(22) Date of filing : **11.02.91**

(86) International application number :
**PCT/DK91/00039**

(87) International publication number :
**WO 91/13523 05.09.91 Gazette 91/21**

(54) **A CONTROL AND COMMUNICATION SYSTEM AND CORRESPONDING METHOD.**

(30) Priority : **09.02.90 DK 353/90**

(43) Date of publication of application :
**02.12.92 Bulletin 92/49**

(45) Publication of the grant of the patent :
**03.05.95 Bulletin 95/18**

(84) Designated Contracting States :
**AT BE CH DE DK ES FR GB GR IT LI LU NL SE**

(56) References cited :
**EP-A- 0 152 341**
**GB-A- 2 061 581**
**NTZ NACHRICHTECHNISCHE ZEITSCHRIFT.**
**no. 2, 1962, BERLIN DE pages 79 - 83;**
**E.BARANOWSKI: "Eine Fernbedienungsan-**
**lage für Kurzwellensender"**

(73) Proprietor : **FLEX PRODUCTS A/S**
**Svinget 2**
**DK-6100 Haderslev (DK)**

(72) Inventor : **NIELSEN, Ejlif**
**Söndergrade 10**
**DK-6780 Skaerbaek (DK)**
Inventor : **MOLLER, Nicolai, Kristian**
**Genner Bygade 28**
**DK-6200 Aabenraa (DK)**
Inventor : **HANSEN, Erik**
**Toldbodgade 11**
**DK-6520 Toftlund (DK)**

(74) Representative : **Andersen, Henrik Rastrup et**
**al**
**c/o Plougmann & Vingtoft A/S,**
**Sankt Annae Plads 11,**
**P.O. Box 3007**
**DK-1021 Copenhagen K (DK)**

## Description

The present invention relates to systems and methodology which make it possible, in a highly reliable and, optionally, checkable manner, and employing, inter alia, a radio broadcast disseminated via a private, public, national or international network, to communicate with, and exert control over certain desired functions of an apparatus, a device or a system which is [or at least (in the case of a system) a controllable part of which is] situated at a location remote from the controlling person.

Those preferred embodiments of the present invention which are described in detail in the present specification are described in the context of the application of the invention in the technical field of supplying, transmitting and distributing electrical power or energy. However, as will become apparent from the disclosure below (vide infra), the invention is equally well suited to a wide range of other applications.

## BACKGROUND OF THE INVENTION

Modern society is to a high degree dependent on electrical power and electrical energy. Thus, many industries are totally dependent on the supply of electrical power and energy; furthermore, the past 15 years have seen increasingly pronounced computerization of numerous operations and functions, which thereby become totally dependent on a stable and reliable supply of electrical energy.

In contrast to the supply of, e.g., gaseous, liquid or solid fuels, or of heat in the form of pressurized steam, hot water, etc., where buffer storage may be established for coping with situations of extremely high demand or high consumption, the supply of electrical power or energy cannot be ensured by buffer storage, since electrical energy has to be generated at the very moment it is required. This situation and modern society's total dependence on electrical power and energy make it essential that the supplier of electrical energy and power has a production, transmission and distribution system capable of coping with even the most extreme electrical power and energy demands, and can control the production, transmission and distribution of electrical energy in accordance with the demand for electrical energy applying at any given time.

As will be appreciated, demands vary not only throughout the year, but also within a single day. The techniques for producing, transmitting and distributing electrical energy for complying with these demands or requirements has been refined throughout the years in order to ensure a stable and correct electrical power supply to the consumer. For obvious reasons, electrical power suppliers have attempted to stimulate a more even energy consumption by, e.g., varying the tariff, i.e. the price to be paid for a specific amount of electrical energy (normally a kilowatt-hour), at certain times of the day and the year. In extreme situations, i.e. in periods of extremely high electrical energy or electrical power demand, the supplier of electrical power or energy furthermore wishes to be able to exert some degree of positive control over which consumers consume electrical energy or power at a given time, in order to be able to postpone consumption of electrical energy or power for "low-priority" purposes to a specific time at which the demand for electrical energy is relatively low.

Certain techniques have been developed for solving the above problems and, e.g., rendering it possible to provide a time-of-day tariff or day/night tariff by providing a meter including a clock controlling the switching of the meter from, e.g., a low tariff to a high tariff or vice versa.

As described in, e.g., US 4,390,839, it has further been suggested to provide a time-of-day meter which is remotely controllable for switching between different kilowatt-hour rates or tariffs by the supply of a tone-burst to the meter through the power lines connected to the meter. This technique is, however, neither reliable nor satisfactory, since the electrical power supplier normally attempts to eliminate any signals having a frequency different from the mains supply frequency from the power supply lines, and the tone-burst signals are consequently most often muted in the transmission or distribution network; this results in the intended tariff-shifts not being established.

EP-A-0 152 341 disclose a control and communication system for remotely controlling switching between at least two states of an apparatus, for example an electrical power meter, wherein control signals to a plurality of remotely located receivers are sent using existing standard FM broadcast transmitters.

A similar system is disclosed in GB-A-2 061 581, wherein transmitters and receivers of an existing standard AM broadcast system are used.

The system according to the present invention differs from these prior art systems in that only transmitters and receivers of the NMT and GSM mobile telephone systems and/or preexisting paging systems are used.

One object of the present invention is to provide novel techniques which render it possible for a supplier of electrical power or energy to (1) remotely control the consumption of electrical energy by the individual consumer by switching specific "low-priority" loads in and out of the electrical power supply network in accordance with the demand for electrical energy or electrical power, (2) remotely control the tariff-shift in a reliable manner and (3) provide relevant information to the individual consumer.

Another object of the present invention is to provide a novel technique which renders it possible to carry out the above-mentioned remotely controlled switching of loads in and out of the network and further the above-discussed tariff-shifts in independent groups of loads or consumers ranging from a single load or a single consumer to a large group of loads or consumers, such as all household consumers within a specific geographical area, e.g. within a city or an area supplied mainly from a specific power plant or distribution network.

The above objects, together with other objects which on the basis of the disclosure given below will be apparent to a person skilled in the art, are fulfilled by the present invention.

DESCRIPTION OF THE INVENTION

A first aspect ot the invention relates to a control and communication system for communicating with, and at least remotely controlling switching between an initial and a first state of, an apparatus, a device or a system, the control and communication system comprising:
a central control unit for generating a first control signal representing the first state of such an apparatus, device or system, said central control unit comprising a first input for receiving a first input signal representing the state, and an output for outputting the first control signal,
a radio transmitter connected to the output of the central control unit for receiving the first control signal from the central control unit and for broadcasting a first broadcast in response to the receipt of the first control signal, and
a first radio receiver or a first plurality of radio receivers for receiving the first broadcast from the radio transmitter, the first radio receiver or each radio receiver of the first plurality of radio receivers being arranged at a respective switching means and generating a first receiver signal in response to the receipt of the first broadcast, the receiver signal causing the switching by the switching means,
characterized in that the radio transmitter and the first radio receiver or each radio receiver of the first plurality of radio receivers are selected from the group consisting of:
radio transmitters and radio receivers of the NMT mobile telephone system,
radio transmitters and radio receivers of the GSM mobile telephone system, and
radio transmitters and radio receivers of a private, public, national or international paging system employing AM, FM, PM, PCM, DTMF or CW modulation and operating in the HF, VHF, UHF, SHF or EHF frequency range.

The nature of the initial and first states will clearly depend upon the nature of the apparatus, device or system in question. For example, in applications of the invention to an electrical power supplying system, the initial state may represent a present-time state such as the present-time electrical power consumption by an electrical power consuming load of the electrical power supplying system, and/or a present-time state concerning the state of the power-supplying source (e.g. the state of a primary power-supplying source, i.e. a power station, or of a secondary power-supplying source such as a transformer station) or of the electrical power supplying network, i.e. an electrical power supply state, i.e. a state reflecting the production and distribution of electrical energy and power through the electrical power supplying system. The initial state may alternatively, for example, correspond to a present-time state of an electrical metering means (the metering means comprising or being connected to the above-mentioned switching means) by which the tariff itself is changed, and/or to a present-time display of information to the consumer, e.g. information relating to the present-time electrical energy tariff.

The first state of an electrical power supplying system may, for example, represent an expected state such as a foreseen development in the electrical power consumption, e.g. an increase or a decrease in the electrical power consumption within a short period of time or a foreseen change in the production or distribution capability of a power station and the electrical power supplying network of the electrical power supplying system, etc. Alternatively, the first state of such a system may, e.g., correspond to a new state of the above-mentioned metering means, i.e. to an new tariff.

In the case of other types of apparatus, device or system, the initial and first states, respectively, may, by way of example, correspond to:
a switched-off (i.e inactive) state and a switched-on (i.e. active) state or vice versa, such as switched-off/switched-on states of, e.g., an electric motor, a solenoid, a pump, a ventilator, a conveyor, a moving stairway (escalator), a street-lamp, a neon sign, an electric heater, or an electrically actuated oil- or gas-fired heating system;
a closed state and an open or partially open state or vice versa, such as closed/open or closed/partially open states of, e.g., an electrically actuated valve, a sluice, a shutter, a door, a blind, or a curtain;
a forward-direction state and a reverse-direction state or vice versa, such as forward-direction/reverse-direction states of, e.g., an electric motor, a solenoid, a pump, a ventilator, a conveyor or a moving stairway (escalator);

3

a lower-speed state and a higher-speed state or <u>vice versa</u>, such as lower-speed/higher-speed states of, e.g., an electric motor, a pump, a ventilator, a conveyor or a moving stairway (escalator).

a normal or default state and an alternative state or <u>vice versa</u>, such as normal or default/alternative states of, e.g., a display or a system permitting disablement (e.g. identification and subsequent rejection) of credit cards, debit cards or magnetized cards permitting access to a building.

The first input signal which is input to the central control unit of a control and communication system according to the invention may constitute any appropriate input, such as an analog or digital signal input, and may be generated, e.g., by means of a keyboard, a switch generating any appropriate signal, or the like. Alternatively, the first input of the central control unit may be connected (through an appropriate interface) to a central computer, for example a central computer of a power station or a central operator room controlling a plurality of power stations and electrical power supplying networks.

The output of the central control unit may be connected directly to the radio transmitter or be connected through amplifying or converting circuitry, such as a modem, for transmitting the first control signal to the radio transmitter.

The radio transmitter may, in principle, be any suitable type of radio transmitter fulfilling relevant statutory radio transmission and communication requirements for the regional, national or international territory or territories in question. However, as indicated above, it is preferred within the context of the present invention that the radio transmitter is a private, public, national or international radio transmitter employing AM, FM, PM, PCM, DTMF, or CW modulation and operating in the HF, VHF, UHF, SHF or EHF frequency range. A suitable type of transmitter is an FM transmitter conforming to the RDS (Radio Data System) specification.

Examples of national and international transmitters (operating under the cooperative control of the appropriate national telecommunication authorities) are (i) transmitters of the NMT (Nordic Mobile Telephone) system, by which radio communication between mobile or stationary NMT radio-telephone units within the territories of the four Nordic countries (Denmark, Sweden, Norway and Finland) is possible, and (ii) transmitters of the coming GSM (in French: "Globale Systeme Mobile") system, which is an as yet unimplemented system for global radio communication between mobile or stationary GSM radio-telephone units.

It is particularly preferred that the transmitter is a radio transmitter of a private, public, national or international paging system, examples of such paging systems being the Danish OPS ("offentligt personøge-system") system and the European ERMES (European Radio Message System) system. Such paging systems are particularly advantageous in the context of the present invention for several reasons, for example: (a) they are, in general, tried, tested and well-maintained systems complying with stringent requirements with respect to the quality and reliability of the various component installations and of the transmissions and broadcasts themselves, and (b) they comprise a large number of essentially identical radio transmitters distributed generally rather evenly throughout the territory or territories in question; this latter feature, in particular, contributes to ensure high uniformity and adequate strength of the broadcast (transmitted by the latter-mentioned plurality of radio transmitters) received simultaneously by a plurality of radio receivers, since there will generally be at least one transmitter (of this plurality of transmitters) in reasonable geographical nearness to each radio receiver to which a given broadcast is directed. For example, the Danish OPS system comprises approximately 70 transmitters covering most of the geographical area of Denmark, excluding the Faroe Islands and Greenland. Adequate strength of the received broadcast may help to ensure that other broadcasts, particularly relatively weak broadcasts; which are not intended for reception by the radio receiver(s) in question do not "override" or otherwise interfere with the intended broadcast.

The European ERMES public paging system is at present unimplemented. However, present projections predict a European territorial coverage of ca. 20% by the year 1993, and ca. 80% by 1997.

As already indicated (<u>vide supra</u>), the radio receiver(s) employed within the context of the present invention should be of a type compatible with and corresponding to the radio transmitter in question.

Further to the discussion above concerning the nature of initial and first states between which switching may take place, and as another aspect of the invention, the apparatus, device or system in question may be selected from the group consisting of: electrical power supplying systems; display systems, including LCD displays, LED displays, lamp displays, TV monitors, light projectors and electromechanical displays; alarm systems, including acoustical and visual alarm systems; paging systems and devices; ventilation systems and devices; sprinkler systems and irrigation systems; credit card and debit card disabling systems; remote-control systems; illumination systems and devices; electric motors and electrically driven pumps for pumping gases or liquids; electromechanical lifting and moving systems; electrically operated valves, shutters and sluices regulating the flow of gases or liquids; windmills, including windmills generating electrical power and windmills powering water-pumping devices; household appliances; and heating systems and devices, including cooking appliances.

Thus, some non-limiting examples of applications to which the present invention is well suited are:

remote-controlled switching on and switching off of devices or installations such as electric street lamps, electrically driven water sprinklers for watering fields or green-house plants or the like, heating systems (e.g. for heating road surfaces, leisure homes, summerhouses, swimming pools or greenhouses) and acoustical warning systems such as civil defence public warning systems,

remote-controlled alteration of a price displayed on a display, e.g. the price of motor fuel (gasoline, diesel fuel etc.) as displayed on a refuelling pump or elsewhere at a fuel station by means of an electromechanical display, lamp-illuminated display or other type of display, and

remote-controlled regulation of valves, sluices and the like in chemical or other process plants, or at dams, water reservoirs or weirs.

In a further aspect of the invention, the first radio receiver or each radio receiver of the first plurality of radio receivers is connected to the apparatus, device or system in question via the respective switching means for switching the apparatus, device or system from a normal or default state to a first state in response to the first receiver signal being supplied to the respective switching means.

A particular embodiment of the invention provides a control and communication system for an electrical power supplying system including at least one power-supplying source and an electrical power supplying network receiving electrical power from the power-supplying source and supplying the electrical power to a plurality of electrical power consuming loads, each of the electrical power consuming loads being connected to the network through a respective metering means which comprises or is connected to the switching means, the control and communication system comprising:

a central control unit for generating a first control signal representing a first state of the electrical power supplying system, the central control unit comprising a first input for receiving the first input signal representing the state, and an output for outputting the first control signal,

a radio transmitter connected to the output of the central control unit for receiving the first control signal from the central control unit and for broadcasting a first broadcast in response to the receipt of the first control signal, and

a first plurality of radio receivers for receiving the first broadcast from the radio transmitter, each radio receiver of the first plurality of radio receivers being arranged at a respective metering means and generating a first receiver signal in response to the receipt of the first broadcast.

In connection with the latter particular embodiment of the invention, the first control signal representing the first state of the electrical power supplying system may be used for switching the metering means between different tariffs. Thus, in a further aspect of this particular embodiment, each radio receiver of the plurality of radio receivers is connected to the respective metering means for switching the respective metering means from a normal or default tariff to a first tariff in response to the first receiver signal being supplied to the respective metering means.

In a still further aspect of this particular embodiment, each radio receiver of the first plurality of radio receivers is connected to a respective on/off switching means for receiving the first receiver signal and for disconnecting an electrical power consuming load (which constitutes at least part of the electrical power consuming load connected to the electrical power supplying network through the respective metering means) from the electrical power supplying network in response to the first receiver signal being supplied to the respective on/off switching means.

Consequently, the first control signal controls the switching off of a load from the electrical power supplying network, this switching off being performed in the event of the power demand exceeding a critical threshold or increasing more rapidly than the available power or energy.

Preferred embodiments of a control and communication system according to the present invention further comprise a fold-back radio receiver for generating a fold-back signal in response to the receipt of the first broadcast from the radio transmitter, the central control unit then further comprising a fold-back input for receiving the fold-back signal. By the provision of a fold-back radio receiver generating a fold-back signal supplied to the central control unit, the entire control and communication system is provided with a pseudo-feedback loop, since the fold-back signal constitutes a pseudo-feedback signal informing the central control unit that the fold-back radio receiver has received the first broadcast from the radio transmitter. Apart from providing a pseudo-feedback loop (it is not possible, in practice, to establish a true feedback loop from all radio receivers of a first plurality of radio receivers to the central control unit), the incorporation of a fold-back radio receiver further renders it possible to check whether false or erroneous broadcasts are presented to the radio receiver(s) of the control and communication system according to the present invention; such false or erroneous broadcasts may be generated, e.g., by computer hackers, or they may be broadcasts from radio transmitters broadcasting at a radio frequency which is different from the broadcasting frequency of the radio transmitter of the control and communication system of the invention but which, however, generates cross-modulation products in a radio receiver of the control and communication system of the invention.

In connection with the problem discussed above, the presentation of false or erroneous broadcasts to the radio receiver(s) might result in the radio receiver(s) generating an unintended first receiver signal and thereby causing an unintended switching from an initial state to a first state, e.g. an unintended change in electrical energy supply tariff or an unintended switching off of a load from an electrical supply metwork. In order to minimize or possibly substantially eliminate the risk that an erroneous or false broadcast may activate a radio receiver of a control and communication system according to the invention and comprising a fold-back receiver, it is preferred that the radio receiver(s) comprise(s) a delay means for delaying the generation of the first receiver signal in response to the receipt of the first broadcast. By the provision of a delay means, the generation of the first receiver signal in the radio receiver(s) is delayed for a period of time at least corresponding to the period of time during which the central control unit may respond to a false or erroneous fold-back signal presented to the central control unit from the fold-back receiver and present a correct first control signal to the radio transmitter so as to cause the transmitter to broadcast a correct broadcast to the radio receiver(s) and thereby override any erroneous or false broadcast received by the radio receiver(s).

As discussed above, the provision of a fold-back radio receiver makes it possible to check, by means of a pseudo-feedback loop, the radio transmission within a control and communication system according to the present invention. In accordance with the teachings of the present invention, the fold-back signal and the first control signal are to be compared in order to determine whether the system is operating properly and/or whether false or erroneous broadcasts have been presented to the radio receiver(s). The comparison of the first control signal and the fold-back signal may be carried out within the control and communication system according to the present invention, since the central control unit may advantageously further comprise a comparator means for comparing the first control signal and the fold-back signal so as to determine whether the fold-back radio receiver, and thereby the radio receiver(s) has/have received the first broadcast correctly or incorrectly. However, the comparison of the first control signal and the fold-back signal may alternatively be carried out in any appropriate external means, for example a control computer of a power station.

The first broadcast may be of any appropriate, easily detectable type, such as a continuous broadcast signal or a short-duration, intermittently transmitted broadcast or a broadcast transmitted only once. Depending on the type of broadcast in question, the generation of the fold-back signal (in the case of a control and communication system according to the invention which comprises a fold-back radio receiver) may be delayed relative to the generation of the first control signal by the central control unit, and the central control unit consequently preferably comprises a storage means for storing the first control signal and a delay means for delaying the comparison of the first control signal and the fold-back signal for a period of time after the generation of the first control signal, such as a predetermined period of time corresponding to the total period of time taken to transmit the first control signal from the central control unit to the radio transmitter, generate and broadcast the first broadcast from the radio transmitter, receive the first broadcast by the fold-back radio receiver and generate the fold-back signal within the fold-back radio receiver, and transmit the fold-back signal from the fold-back radio receiver to the central control unit.

The first control signal representing the first state of the apparatus, device or system in question may be used for informing a subscriber, customer or consumer of the present state of the apparatus, device or system; for instance, in the case of a control and communication system for an electrical power supplying system, information concerning the present tariff may be provided. Thus, in a further aspect of a control and communication system according to the present invention, each radio receiver is connected to a respective display means for displaying a first piece of information in response to the first receiver signal being supplied to the respective display means.

In accordance with a further aspect, a control and communication system of the invention may perform a plurality of control operations, since the first control signal may constitute a specific control signal of a first plurality of control signals representing respective states of the apparatus, device or system in question, the first control signal being generated in response to the input, to the central control unit through the first input thereof, of a specific input signal of a first plurality of input signals representing the states, the radio transmitter broadcasting a specific broadcast of a first plurality of broadcasts in response to the receipt of the specific control signal from the central control unit, the radio receiver(s) generating a specific receiver signal of a first plurality of receiver signals in response to the receipt of the specific broadcast, and, in those cases where the control and communication system comprises a fold-back receiver, the fold-back radio receiver generating a specific fold-back signal of a first plurality of fold-back signals in response to the receipt of the specific broadcast.

In accordance with this particular aspect of the present invention, the first plurality of control signals may represent, for example:

different loads to be switched into or out of an electrical power supplying network, or different electrical energy tariffs; or

different sets of information for display via a display means, e.g. departure times for trains, aircraft, ferries and the like, or information regarding different electrical energy tariffs;

In a presently preferred embodiment of a control and communication system of the present invention as applied in the field of supplying electrical power (vide infra), the first plurality of control signals comprises three control signals defining a low tariff, a medium, normal or default tariff, and a high tariff, corresponding to periods of low consumption of energy, periods of rather stable, normal consumption of energy, and periods of high consumption of energy, respectively, from the power supplying system. Normally, the low tariff is a night-time tariff, the normal or default tariff is a day-time tariff, and the high tariff is a peak power consumption tariff applying in the early morning and in the late afternoon and early evening. Clearly, however, the first plurality of control signals may comprise more than three control signals, corresponding to a larger number of individual states of, e.g., an electrical power supplying system.

In order to ensure that the first radio receiver or each radio receiver of the first plurality of radio receivers is operating correctly and is not unintendedly triggered by false or erroneous broadcasts, the radio receiver(s) may advantageously comprise logical means for positively identifying any received broadcast as being either a broadcast intended for the radio receiver in question or a broadcast not intended for the radio receiver in question. In order to further increase the confidentiality and security of the entire control and communication system and further minimize or substantially eliminate the risk that a false broadcast received by the radio receiver(s) may result in the unintended generation of the first receiver signal, the central control unit preferably further comprises an encryption means for encrypting the control signal or control signals output to the radio transmitter, and each radio receiver similarly preferably comprises a decryption means for decrypting any electrical signals generated by the radio receiver in question in response to the receipt of a broadcast.

The encryption and decryption carried out in the central control unit and in the radio receiver(s) may be carried out in any appropriate manner by employing secret or public keys, by employing static or dynamic encryption routines or any combination thereof making use of a static and/or dynamic encryption key, a static and/or dynamic encryption algorithm, a combination of the control signal or control signals, and a dynamic, time-varying function or a combination thereof, while the decryption means performs a corresponding decryption routine. The technique of encrypting and decrypting messages, data or signals is well-known within the technical field of data communication and broadcasting and may be refined for complying with any specifically required level of secrecy or security.

As indicated previously (vide supra), the radio communication link between the radio transmitter and the radio receivers may be constituted by any appropriate radio communication system, and in a further aspect of the invention, the radio transmitter and the radio receiver(s) are a transmitter and receiver(s) of a microwave communication system or an earth-satellite/satellite-earth communication system or the like.

In a presently preferred embodiment of a control and communication system of the present invention as applied in the field of supplying electrical power (vide infra), the control signal or signals, the receiver signal or signals and the fold-back signal or signals are digital signals rendering it possible to carry out the control and communication routines by means of digital electronic circuitry, such as computers, etc. Clearly, however, one or more of the above signals may be an analog signal, and a control and communication system according to the present invention may consequently comprise appropriate analog/digital and digital/analog converting means for converting the analog signal or signals in question into any appropriate digital form and for converting the signal or signals from digital representation into analog form, respectively. In a further aspect, the control signal or signals, and/or the receiver signal or signals, and/or the fold-back signal or signals are AM, FM, PM, PCM, DTMF or CW modulated signals.

As mentioned above, the radio transmission system of a control and communication system according to the present invention may be implemented in numerous ways. By employing the RDS system (Radio Data System), the control signals may be broadcast by a conventional FM radio transmitter broadcasting in accordance with the RDS specification, which has been accepted by most countries throughout the world. The broadcast signals and any other appropriate information regarding the control and communication system according to the present invention may be transmitted in accordance with the RDS standard as transparent data channel codes (TDC codes) or comprised by the paging service (PA service) of the RDS standard. Any other appropriate coding of the RDS standard may obviously be used for the transmission of the broadcasts and any other information from the transmitter in question to the radio receivers of the control and communication system according to the present invention.

In accordance with the above-stated objects and other objects of the present invention, a control and communication system of the of the present invention may provide communication from the central control unit to a single radio receiver (and thereby, where relevant, to a single consumer, subscriber or customer employing the services provided by a system according to the invention) or to a small or large group of identical receivers (and thereby, where relevant, to a small or large group of consumers, subscribers or customers) provided with identical logical means for identifying the broadcasts intended for the radio receivers of that group. Accordingly, and as a further aspect of the invention, the central control unit further generates a second control signal representing a second state of the apparatus, device or system,

the second control signal being output through the output of the central control unit to the radio transmitter broadcasting a second broadcast in response to the receipt of the second control signal,

the fold-back radio receiver, in those cases where the system comprises a fold-back receiver, further receiving the second broadcast and generating an alternative fold-back signal which is transmitted to the central control unit, and

the control and communication system further comprises:

a second radio receiver or a second plurality of radio receivers for receiving the second broadcast from the radio transmitter, the second radio receiver or each radio receiver of the second plurality of radio receivers being arranged at a respective switching means and generating a second receiver signal in response to the receipt of the second broadcast.

As will be readily understood, the second radio receiver or each radio receiver of the second plurality of radio receivers may have characteristics equivalent to the characteristics of the first radio receiver or first plurality of radio receivers as defined above.

In accordance with additional features characteristic of the present invention, the control signal(s) transmitted in the form of a broadcast from the radio transmitter advantageously further include a clock signal or other separately identifiable marker signal for synchronising each receiver of a plurality of radio receivers from the central control unit, and/or in the case of a particular embodiment of the control and communication system of the invention as applied in the field of supplying electrical energy (<u>vide</u> <u>supra</u> and <u>vide infra</u>), the control signal(s) may further include information regarding the present kilowatt-hour rate. The provision of a clock signal or other separately identifiable marker signal may, e.g., be of value in preventing fraudulent misuse, for example attempts to hinder the intended switching of an electrical energy tariff from a low tariff to a higher tariff by wrapping the radio receiver(s) in a material (such as aluminium foil) which is not transparent to radio waves. In such cases, the radio receiver may be adapted to produce, e.g, an alarm signal (which may, e.g., be transmitted by some means to the central control unit) in the event of failure of the radio receiver to receive a particular clock signal or like signal.

Examples of other separately identifiable marker signals are signals based on random variables, and signals generated in accordance with prescheduled variations in an algorithm.

Each radio receiver is preferably implemented as an autonomously operating unit comprising a central processing unit controlling the operation of the radio receiver and receiving additional control data from the central control unit for controlling the operation of the central processing unit of the radio receiver in question. Thus, the additional data transmitted through the wireless link constituted by the radio transmitter and the individual radio receiver may transmit control data programming the central processing unit of the radio receiver in question, etc.

The present invention further relates to a radio receiver of a control and communication system according to the present invention and having any of the above-described characteristics and fulfilling the above discussed objects.

The objects of the invention are further fulfilled by a method according to the present invention for communicating with, and at least remotely controlling switching between an initial and a first state of, an apparatus, a device or a system,

the method comprising:

generating a first control signal representing a first state of the apparatus, device or system in question in response to the receipt of a first input signal representing the state,

inputting the first control signal to a radio transmitter,

broadcasting a first broadcast from the radio transmitter in response to the receipt of the first control signal,

receiving the broadcast from the radio transmitter by means of a first radio receiver or a first plurality of radio receivers, the first radio receiver or each radio receiver of the first plurality of radio receivers being arranged at a respective switching means, and

generating a first receiver signal at the first radio receiver or at each radio receiver of the first plurality of radio receivers in response to the receipt of the first broadcast, the receiver signal causing said switching by said switching means,

characterized in that the radio transmitter and radio receiver(s) are selected from the group consisting of:

radio transmitters and radio receivers of the NMT mobile telephone system,

radio transmitters and radio receivers of the GSM mobile telephone system, and

radio transmitters and radio receivers of a private, public, national or international paging system employing AM, FM, PM, PCM, DTMF or CW modulation and operating in the HF, VHF, UHF, SHF or EHF frequency range.

The method according to the present invention may further be implemented in accordance with any of the above-described characteristics of a control and communication system according to the present invention.

Particular embodiments of the invention which are presently preferred in connection with the application of the invention in the field of supplying electrical power or energy will now be further described with reference to the drawings, in which:

Fig. 1 is an overall schematic view of a control and communication system according to the present invention comprising a central control unit connected to a central control board of a power station, a wireless transmission link from the central control unit to individual radio receivers located at respective meters, and fold-back receivers connected to the central control unit,

Fig. 2 is a schematic view of the radio receiver connected to its meter, and further connected to a display and respective loads through switches,

Fig. 3 is a detailed diagrammatical view of the tuner, intermediate-frequency, discriminator and low-frequency parts of the radio receiver shown in Figs. 1 and 2,

Figs. 4, 5 and 6 are schematic views illustrating the electronic circuitry of the signal processing and switching parts of the radio receiver, and

Fig. 7 is an overall schematic view of an alternative implementation of a control and communication system according to the present invention, in which an RDS radio link employing frequency modulation is used.

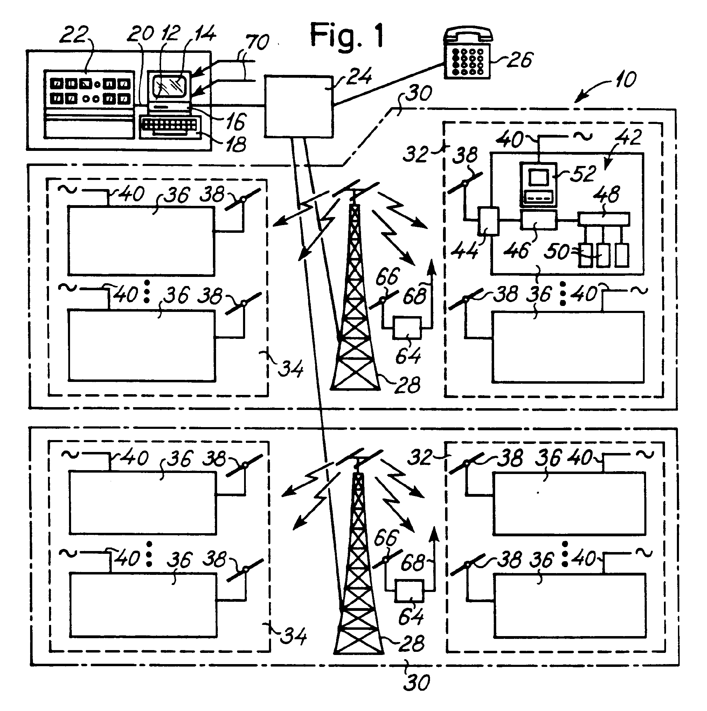

In Fig. 1, a control and communication system 10 for an electrical power supplying system is shown. The control and communication system 10 comprises a central control unit 12 constituted by a personal computer or PC comprising a screen 14, a CPU 16 including a disc drive and a keyboard 18. The central control unit or personal computer 12 is connected through an appropriate interface and through a data communication line 20 to a control board and a central computer of a power station, which control board is designated by the reference numeral 22. Through the data communication line 20, the central control unit 12 receives information and data regarding the present state of the electrical power supplying system, such as the present amount of energy being produced, any changes within a preceding period of time and any expected changes within the following period of time regarding the amount of energy to be produced, the total capacity of the power plant, any relevant data concerning an electrical supplying network which is supplied with electrical power from the power station, the time of day, or any relevant statistical data and/or other relevant data produced by the computer of the power station or supplied to the computer from similar computers located at different power stations connected to the electrical power supplying system to which the present power station and the present electrical power supplying network are connected.

On the basis of the data supplied to the central control unit and on the basis of the software of the PC 12 and possibly any additional information or data input to the personal computer through the keyboard 18 or through an additional input from, e.g., a similar central control unit of a different power station, an external computer or the like, the central control unit or personal computer 12 decides whether the tariff has to be changed in a group consisting of one or more consumers, i.e. a group including electrical power consuming loads, this change of tariff being further displayed to the consumers in question for informing the consumers about the present tariff (such as the present kilowatt-hour rate) so as to encourage the consumers to reduce the power consumption during high-tariff periods, or whether the power consumption has to be reduced if an extreme situation is prevailing or approaching, which extreme situation calls for a reduction in the amount of electrical power consumed, this reduction being brought about by switching loads of a group of consumers from the electrical power supplying network.

Provided the central control unit 12 decides that a change has to be made, the central control unit 12 outputs a control signal constituted by a digital code or a digital message identifying the change to be made to a radio transmission system constituted by a public paging system 24 (which in the embodiment shown in Fig. 1 is constituted by the Danish public paging system OPS), including a public paging system center (which in the embodiment shown in Fig. 1 is constituted by the OPS center OPX located in Copenhagen, Denmark, at the Danish public institution "Statens Teletjeneste"), to which public paging system center 24 alternative signal sources, such as a telephone 26, are connected.

On the basis of the control signal supplied to the public paging system center 24, which control signal preferably includes data encrypted via a combined dynamic and static encryption routine performed by the personal computer 12 by employing an encryption algorithm, such as a DES algorithm, i.e. an algorithm including a public key, or alternatively an algorithm including a secret key, the public paging system center 24 routes the code to the intended transmitter, i.e. the transmitter covering the geographical area in which the consumers are located, which consumers are the intended receivers of the code or message from the central control unit 12. Thus, as previously mentioned, in the Danish public paging system OPS, approximately 70 transmitters cover most of the geographical area of Denmark, excluding the Faroe Islands and Greenland.

In Fig. 1, two transmitters are shown, which transmitters broadcast public paging messages within geographical areas schematically illustrated in Fig. 1 by areas defined by dot-and-dash lines 30.

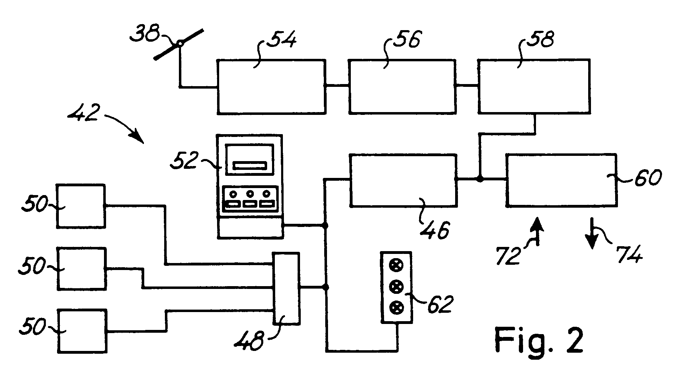

Within each of the dot-and-dash line areas 30 two dotted line areas are shown defined by dotted lines 32 and 34. The dotted lines 32 and 34 define a first and a second group, respectively, of consumers or loads, which are addressable from the central control unit or PC 12 through the public paging system comprising the transmitters 28. Each of the consumers belonging to one of the groups 32 of 34 is identified by a block 36, which is connected to an aerial 38, and which receives electrical power through a power line 40. The block 36 shown in the right-hand, uppermost part of Fig. 1 includes a diagram 42 schematically illustrating the structure of each of the blocks 36. The structure of the blocks 36 is described in greater detail below with reference to Fig. 2.

In accordance with the teachings of the present invention and as discussed above, a message intended for one of the groups 32 or 34 of one of the areas defined within one of the dot-and-dash lines 30 is, as discussed above, transmitted from one of the transmitters 28 and received by the aerials 38 within the geographical area in question and input to respective receiver circuits connected to the aerials 38 in question. Within the electronic circuitries which have received the messages or the broadcasts, the broadcasts are decrypted and analyzed by the electronic circuitries in question for determining whether or not the message or messages received are intended for the receiver and consumer in question. In the schematic diagram 42, a block 44 is shown schematically illustrating the above discussed electronic circuits. Provided the message or messages received are intended for the receiver and consumer in question, the message is transmitted to a block 46, in which the message causes a shift of tariff from a normal or default tariff to a low or a high tariff or vice versa, or from a low tariff to a high tariff or vice versa, which shift is further displayed to the consumer, as will be discussed below or causes specific loads which are considered to be low priority loads and may be disconnected from the power supplying network or power lines 40 to be disconnected from the network or, in the event that the message constitutes an inverse message as compared to the previously discussed message, causes the load or loads to be connected to the network.

In Fig. 1, a block 48 is shown comprising a set of switches or relays for switching one or more loads 50 out of or into the network, i.e. disconnecting the one or more loads 50 from the power line 40, which is connected to a meter 52, which is also connected to the block 46. The broadcast system of the control and communication system 10 furthermore comprises fold-back receivers 64 provided with aerials 66 and outputs 68 connected to and supplying fold-back signals to the central control unit 12, which fold-back receivers 64 are located within respective geographical areas, such as the areas defined by the dot-and-dash lines 30 shown in Fig. 1, serving as a receiver of a pseudo-feedback loop and further as a telltale. Thus, first each of the fold-back receivers 64 serves the purpose of checking that any codes or messages output from the central control unit 12, and intended for one of the groups 32 or 34 within the geographical area 30 in which the fold-back receiver 64 in question is located, are transmitted from the transmitter 28 located within that area. Provided the fold-back receiver 64 in question receives a broadcast from the transmitter 28, which broadcast is identified by the fold-back receiver 64 in question as a message intended for a group such as one of the groups 32 or 34 shown in Fig. 1 - or an additional third, fourth, ... group located within the geographical area in question - the fold-back receiver in question generates a fold-back signal positively identifying the broadcast received, which fold-back signal is output from the output 68 of the fold-back receiver 64 in question and input to the corresponding input 70 of the central control unit 12, which consequently receives the fold-back signal generated by the fold-back receiver 64 in question and compares the message generated within the central control unit 12 for determining whether or not the fold-back signal input to the central control unit 12 is a correct fold-back signal, i.e. a fold-back signal corresponding to the message or code output from the central control unit 12. Thus, by inputting a correct fold-back signal from a correct fold-back receiver, i.e. the fold-back receiver located at the correct geographical area covered by the correct transmitter 28 from which the message or code was to be transmitted, a central control unit 12 is able to determine that a correct broadcast has been made.

Secondly, in the event that one of the fold-back receivers 64 receives a broadcast and identifies the broadcast as a broadcast intended for receivers belonging to the control and communication system 10, the fold-back receiver 64 in question outputs a corresponding fold-back signal to the central control unit 12. In the event that the central control unit 12 has not previously output a code or a message corresponding to the fold-back signal received from one of the fold-back receivers 64, the central control unit 12 is informed that an erroneous or false broadcast has been transmitted within the area in which the fold-back receiver 64 is located and from which fold-back receiver the fold-back signal is received. In accordance with the software of the PC 12, the PC 12 outputs a message or a code to the public paging system center 24, which message or code results in the broadcasting of a broadcast overriding the erroneous or false broadcast received from the above mentioned fold-back receiver.

In order to ensure that none of the receivers and none of the consumers within the control and communication system has made any changes, e.g. shifted from a correct tariff to an incorrect tariff or switched loads into or out of the network, each of the receivers 36 includes a delay circuit delaying any actions performed by the receiver or electronic circuit in question until a previously determined delay time has lapsed from the receipt of a broadcast causing the above discussed shift or change, so that within the predetermined delay time, the central control unit 12 may cause the broadcast of a correct message or code, which correct message or code overrides the erroneous or false one. Each of the receivers 36 further has a preferred state or a default state corresponding to a normal operation mode at a normal or medium tariff and further a normal operational mode in which none of the loads are disconnected from the power supplying network.

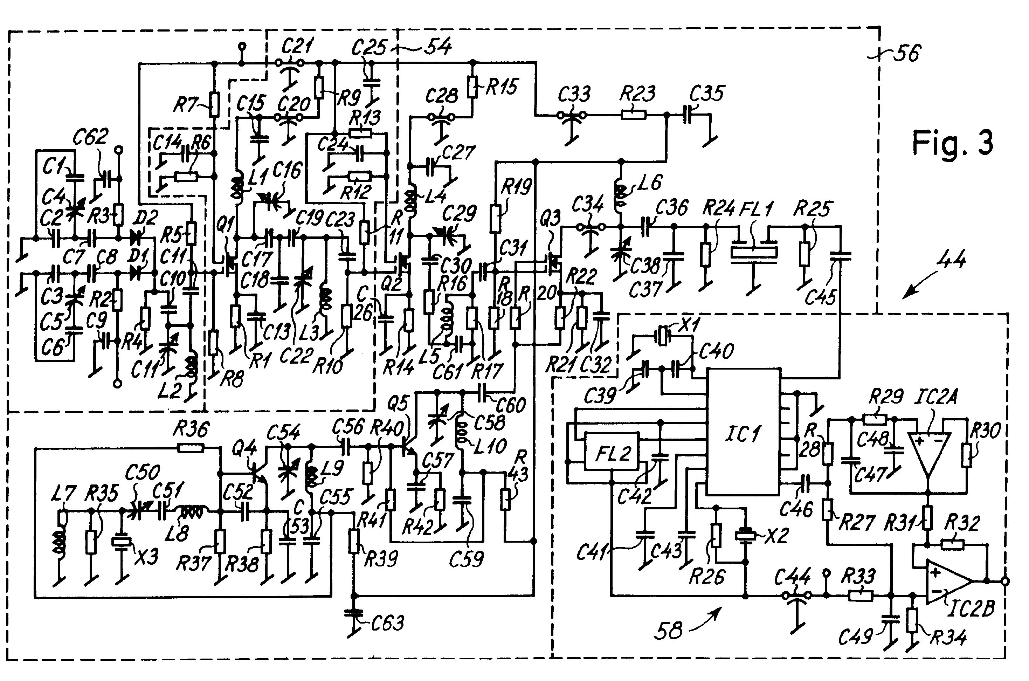

In Fig. 2, the electronic circuit 42 is shown in greater detail, the block 44 being substituted by three blocks 54, 56 and 58 identifying a tuner block, an intermediate-frequency block 56 and a discriminator and low frequency block 58, which are shown in greater detail in the detailed electronic circuit diagram of Fig. 3. In Fig. 2, a block 60 is further disclosed, which block 60 constitutes an input/output block 60 for communicating with an external input/output terminal of an infrared communication link as illustrated by arrows 72 and 74 illustrating the input of data to the input/output block 60 and the output of data from the input/output block 60, respectively. The block 60 is connected to the central block 46 of the receiver circuit 42, which central block 46 includes a central processing unit which may be programmed by the input of data to the input/output block 60, as illustrated by the arrow 72, and from which central processing unit data stored in a storage means, such as a RAM store, may be output from the input/output block 60, as illustrated by the arrow 74.

In Fig. 2, a block 62 is further disclosed, which block illustrates a display comprising three lamps or LEDs, e.g. a green, yellow and a red lamp or LED informing the consumer about the present tariff in an obvious and easily appreciable manner by emitting green light when the tariff is the low tariff, yellow light when the tariff is the medium or default tariff, and red light when the tariff is the high tariff. Obviously, more than three tariffs and displays may be provided. In Fig. 2, the meter 52 is also provided with three lamps or LEDs corresponding to the lamps or LEDs of the display 62, and furthermore provided with three counters counting the accumulated kilowatt-hours for each of the three tariffs or the accumulated amounts of each of said tariffs.

It is to be realised that each of the receivers of the control and communication system 10 shown in Fig. 1 constitutes a receiver of a public paging system such as the Danish OPS system, which receiver is capable of responding to a code number identifying the receiver's identity or membership of a group of receivers of the control and communication system according to the present invention and, preferably, further a code number which may be addressed from an external source, such as the telephone apparatus 26 shown in Fig. 1, by the addressing of which code number an optional function, e.g. the switching on or off of the heating or the lighting of a house, or the turning on or off of an electric apparatus, such as a cooking appliance, may be accomplished. Furthermore, the receivers may serve additional functions of warning, informing, etc. of the public paging system.

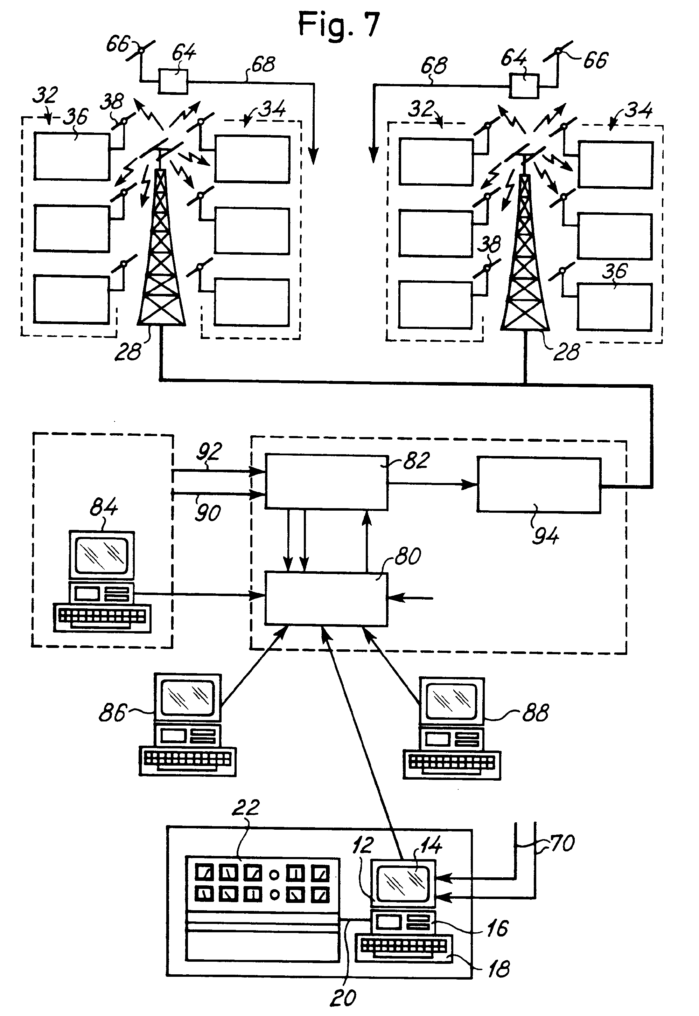

Turning now to Fig. 7, a slightly modified control and communication system according to the present invention is shown in which the broadcast link is constituted by an FM (frequency modulated) RDS (Radio Data System) broadcast link. In Fig. 7, the transmitters 28 consequently constitute FM radio transmitters broadcasting in accordance with the FM RDS standard. The receivers 36 of the control and communication system are, as shown in Fig. 1, located in groups 32 and 34, and the above described fold-back receivers 64 are further provided in the FM RDS transmission system shown in Fig. 7. In the lower part of Fig. 7, the control board 22 and the central control unit 12 are shown, which central control unit 12 in Fig. 7 is connected to an RDS coding block 80, which is further connected to a stereophonic coding device or block 82. The RDS coding block 80 further communicates with three or more computers 84, 86 and 88 inputting RDS dynamic data, paging data and traffic information (TMC: Traffic Message Channel) data, respectively, to the RDS coding block 80. The stereophonic coding block 82 further receives audio signals 90 and 92 constituting a stereophonic audio signal and outputs a base band signal including RDS information to a VHF/FM transmitter driver block 94. The block 94 is connected to the transmitters 28 shown in the upper part of Fig. 7, which transmitters transmit or broadcast the VHF/FM signals, including the base band signal, and further the RDS signals or codes, in which any messages or codes generated by the central control unit 12 are included. The receivers 36 and the fold-back receivers 64 operate in a manner completely identical to that discussed above with reference to Fig. 1.

It may be mentioned that apart from a frequency modulated (FM) RDS broadcast system, the receivers 36 may alternatively respond to teletext information of VHF or UHF television broadcasts, or any broadcasts such as microwave broadcasts, pulse code modulated (PCM), phase modulated (PM), dual tone multi frequency (DTMF) transmission or encoding standards, etc.

In Fig. 3, a detailed electronic circuit diagram of the receiver block 44 is shown comprising the tuner block 54, the intermediate frequency block 56 and the discriminator and low frequency block 58. The tuner constitutes a 470 MHz tuner for operation in accordance with the Danish public paging system (OPS) standard and is a space diversity, superheterodyne receiver of a structure well known in the art per se. The electronic circuit was implemented in accordance with the below example 1 on a single-sided printed circuit board by using SMD (surface mounting device) technique. From the discriminator and low frequency block 58, a low frequency signal constituting a digital code signal is output from an output terminal designated ST3.

EXAMPLE 1

The electronic circuit illustrated in Fig. 3 was implemented from the following components:

| Quantity | Component | Value or type (Resistors in $\Omega$ and capacitors in F) |
|---|---|---|
| 1 | R16 | 80 |
| 3 | R17, R39, R43 | 470 |
| 1 | R18 | 33K |
| 1 | R19 | 220K |
| 1 | R23 | 56 |
| 2 | R24, R25 | 2K7 |
| 1 | R26 | 10k |
| 2 | R28, R29 | 56K |
| 2 | R31, R38 | 1K |

| 1 | R32 | 150K |
|---|---|---|
| 1 | R35 | 560 |
| 1 | R36 | 22K |
| 2 | R37, R40 | 12K |
| 1 | R41 | 47K |
| 1 | R42 | 680 |
| 6 | ST1, ST2, ST3, ST4, ST5, ST6 | PINHEAD |
| 1 | X1 | 20.945 MHz CL=20p |
| 1 | X2 | 455 KHz DISKR |
| 1 | X3 | 74.68333 MHz SERIE |
| 1 | C53 | 39p |
| 1 | C56 | 2P7 |
| 1 | C58 | 2-25P |
| 1 | C61 | 22P |
| 2 | D1, D2 | BA682 |
| 1 | FL1 | QMF214 |
| 1 | FL2 | CFW455E |
| 1 | IC1 | MC3361D |
| 1 | IC2 | NE532 |
| 4 | L1, L2, L4, L9 | N=2; 0=1.5 |
| 1 | L3 | N=3; 0=1.5 |
| 1 | L5 | 33N |
| 1 | L6 | 0.5U |
| 1 | L7 | 680N MURATA |
| 1 | L8 | N=10.7 |
| 1 | L10 | N=1; 0=1.5 |
| 3 | Q1, Q2, Q3 | BF996S |
| 2 | Q4, Q5 | BFS17 |
| 3 | R1, R14, R21 | 270 |
| 2 | R2, R3 | 4K7 |
| 1 | R4 | 4K7 |
| 2 | R5, R11 | 560K |
| 7 | R6, R12, R20, R22, R27, R33, R34 | 100K |
| 4 | R7, R8, R13, R30 | 120k |
| 2 | R9, R15 | 100 |
| 1 | R10 | 120K |

13

```
2   C1, C6      1P8
2   C2, C3      10P
3   C4, C22, C29   2-10p VAR
2   C5, C11    2-10P VAR
4   C7, C8, C31, C45     100P
15  C9, C13, C14, C15, C24,
    C25, C26, C27, C32, C35,
    C55, C57, C59, C62, C63  2N7
1   C10  1P
1   C12  2P2
1   C16  2-10p TRIM
2   C17, C19  0.56p
1   C18  10p
5   C20, C21, C28, C33, C44  2N2
1   C23  3P3
2   C30, C60  4p7
1   C34  22P
1   C36  100p
1   C37  47P
2   C38, C54  3-50P
1   C39  56P
1   C40  18p
4   C41, C42, C43, C49  100n
1   C46  1u
1   C47  8N2
1   C48  3N9
1   C50  2-10p VAR
2   C51, C52  10p
```

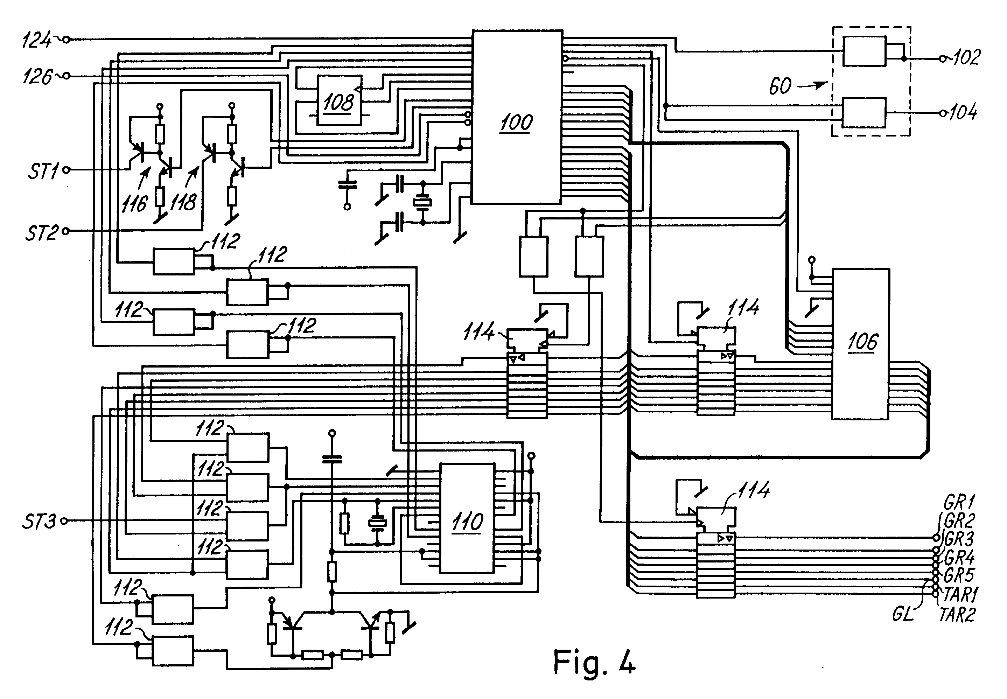

In Fig. 4, a diagrammatical view of the central block 46 shown in Figs. 1 and 2 is disclosed. Centrally, the electronic circuitry shown in Fig. 4 comprises a microprocessor 100, which is connected to the input/output block 60 also shown in Fig. 2, which block receives data input in an RS232 serial protocol through an input 102 and outputs data in an RS232 serial protocol through an output 104. The microprocessor 100 further communicates with an EPROM (Erasable Programmable Read Only Memory) 106 and an E²PROM (Electrically Erasable Programmable Read Only Memory) 108. In the presently preferred embodiment of the electronic circuitry, the microprocessor 100 is constituted by an integrated circuitry of the type 80C31SMD, the EPROM 106 is constituted by an integrated electronic circuitry of the type 27C64SMD, and the E²PROM 108 is constituted by an integrated circuitry of the type 93C46SMD. The block 60 comprises two gates of the type 74HC32. The low frequency output from the block 58 shown in Fig. 3 is input to an input ST3, which is connected to a decoding block 110 constituted by a POCSAG, a decoding circuit developed by British Telecom. Apart from the above-mentioned electronic components, the electronic circuitry shown in Fig. 4 further comprises a plurality of gates designated by the reference numeral 112 and constituted by integrated circuitries of the type 74HC32, and three Latch arrays 114 constituted by integrated circuits of the type 27C64SMD.

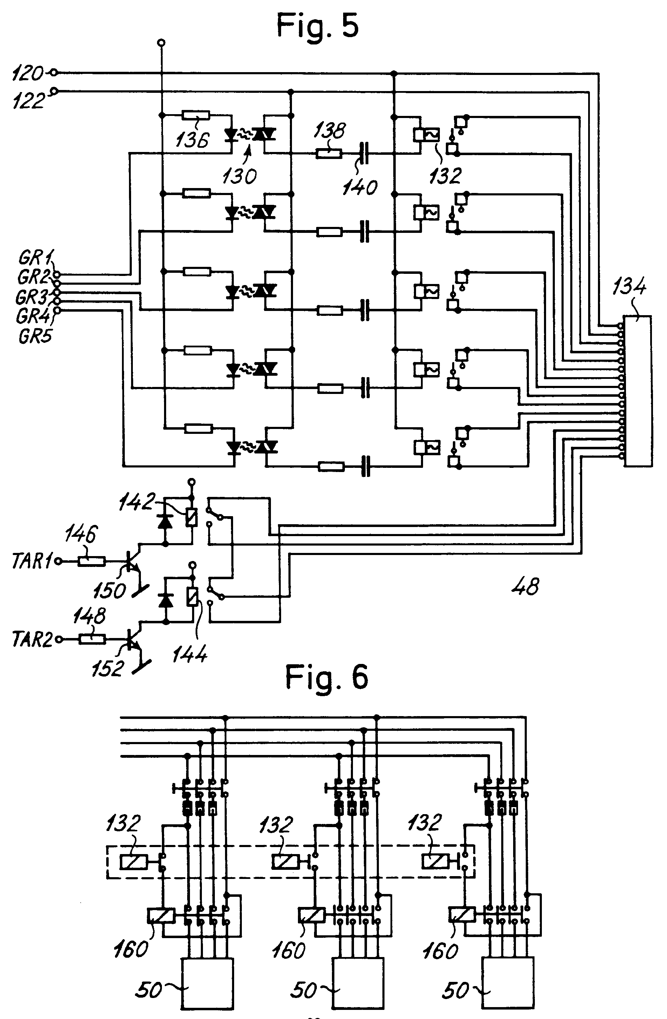

The electronic circuitry further comprises two transistor switches 116 and 118, which are connected to

14

respective output terminals ST 1 and ST 2. Two additional output terminals are designated 124 and 126 and are connected to an alarm, such as a piezo crystal transducer for informing a consumer, and a reset switch, respectively. The Latch array 114 shown in the lower right hand part of Fig. 4 provides a total of eight outputs designated GR1, GR2, GR3, GR4, GR5, GL (Green LED), TAR 1 and TAR 2, respectively, which are connected to respective inputs of the switching block shown in Fig. 5. The output terminals ST 1 and ST 2 are connected to respective terminals of the aerials of the space diversity tuner shown in Fig. 3.

In a modified embodiment of the electronic circuitry shown in Fig. 4, the microprocessor 100 is directly addressable from a conventional AC induction meter (Ferraris meter according to DIN 43864) for receiving SO1 pulses.

The switching block 48 shown in Fig. 5 comprises a total of five optocouplers 130 connected to respective terminals GR1-GR5 and a total of five relays 132. The LEDs of the optocouplers 130 have their anodes connected to a positive voltage supply through a resistor 136 and its cathode connected to its respective terminal GR1-GR5. The triacs of the optocouplers 130 have one terminal connected to a terminal 122 and another terminal connected through a series connection of a resistor 138 and a capacitor 140 to a relay coil of a respective relay 132, the other relay coil terminal of which is connected to a terminal 120. The terminals 120 and 122 receive 220V AC, 50 Hz power. By addressing a respective terminal GR1-GR5, a current path is established through the optocoupler and the relay coil of the respective relay 132, which is consequently activated for shorting respective terminals of the relay, which terminals are connected to a respective terminal of a set of terminals 134. The inputs TAR 1 and TAR 2 are connected to respective relays 142 and 144 through respective resistors 146 and 148, and respective NPN transistors 150 and 152 for activating a switch of the relays 142 and 144, respectively. The terminals of the switches of the relays 142 and 144 are also connected to terminals of the set of terminals 134.

In Fig. 6, a total of three loads 50 are shown, which are connected to the power supply rails RST and 0 through relays 160, the maintenance circuits of which are connected to the above relays 132.

In the above, preferred embodiments of a control and communication system according to the present invention are described together with components of the system, such as the central control unit of the system and the radio receivers, the fold-back receivers, etc. The above detailed description is, however, not to be construed as limiting the scope of the present invention, as the teachings of the present invention are applicable, as already discussed in detail above, in numerous technical fields, e.g. within the technical field of credit and debit card disabling, in warning systems, public paging systems, information systems, remote control systems, such as systems controlling remotely located power plants, windmills, wind rotors, irrigation plants, alarm systems and numerous other similar technical fields, in which the unique technical solutions characteristic of the present invention may advantageously be employed.

## Claims

1. A control and communication system (10) for communicating with, and at least remotely controlling switching between an initial and a first state of, an apparatus, a device or a system,
   said control and communication system comprising:
   a central control unit (12) for generating a first control signal representing said first state of a said apparatus, device or system, said central control unit comprising a first input for receiving a first input signal representing said state, and an output for outputting said first control signal,
   a radio transmitter (24, 28) connected to said output of said central control unit (12) for receiving said first control signal from said central control unit (12) and for broadcasting a first broadcast in response to the receipt of said first control signal, and
   a first radio receiver (44) or a first plurality of radio receivers for receiving said first broadcast from said radio transmitter (24, 28), said first radio receiver (44) or each radio receiver (44) of said first plurality of radio receivers being arranged at a respective switching means (48) and generating a first receiver signal in response to the receipt of said first broadcast, said receiver signal causing said switching by said switching means (48),
   characterized in that said radio transmitter (24, 28) and said first radio receiver (44) or each radio receiver (44) of said first plurality of radio receivers are selected from the group consisting of:
   radio transmitters and radio receivers of the NMT mobile telephone system,
   radio transmitters and radio receivers of the GSM mobile telephone system, and
   radio transmitters and radio receivers of a private, public, national or international paging system employing AM, FM, PM, PCM, DTMF or CW modulation and operating in the HF, VHF, UHF, SHF or EHF frequency range.

2. A control and communication system (10) according to claim 1, said paging system being selected from the group consisting of the Danish OPS system and the European ERMES system.

3. A control and communication system (10) according to claim 1 or 2, said apparatus, device or system being selected from the group consisting of: electrical power supplying systems; display systems, including LCD displays, LED displays, lamp displays, TV monitors, light projectors and electromechanical displays; alarm systems, including acoustical and visual alarm systems; paging systems and devices; ventilation systems and devices; sprinkler systems and irrigation systems; credit card and debit card disabling systems; remote-control systems; illumination systems and devices; electric motors and electrically driven pumps for pumping gases or liquids; electromechanical lifting and moving systems; electrically operated valves, shutters and sluices regulating the flow of gases or liquids; windmills, including windmills generating electrical power and windmills powering water-pumping devices; household appliances; and heating systems and devices, including cooking appliances.

4. A control and communication system (10) according to claim 3 for an electrical power supplying system, said electrical power system including at least one power-supplying source and an electrical power supplying network (40) receiving electrical power from said power-supplying source and supplying said electrical power to a plurality of electrical power consuming loads (50), each of said electrical power consuming loads (50) being connected to said network (40) through a respective metering means (52) which comprises or is connected to said switching means (48), each radio receiver (44) of a said first plurality of radio receivers being arranged at a said respective metering means (52) and generating said first receiver signal in response to the receipt of said first broadcast.

5. A control and communication system (10) according to any one of claims 1, 2 or 3, said first radio receiver (44) or each radio receiver (44) of said first plurality of radio receivers being connected to a said apparatus, device or system via said respective switching means (48) for switching said apparatus, device or system from a normal or default state to a first state in response to said first receiver signal being supplied to said respective switching means (48).

6. A control and communication system (10) according to claim 4, each radio receiver (44) of said first plurality of radio receivers being connected to said respective metering means (52) for switching said respective metering means (52) from a normal or default tariff to a first tariff in response to said first receiver signal being supplied to said respective metering means.

7. A control and communication system (10) according to claim 4 or 6, each radio receiver (44) of said first plurality of radio receivers being connected to a respective on/off switching means (132, 160) for receiving said first receiver signal and for disconnecting an electrical power consuming load (50), which consuming load (50) constitutes at least part of said electrical power consuming load connected to said electrical power supplying network (40) through said respective metering means (52), from said electrical power supplying network in response to said first receiver signal being supplied to said respective on/off switching means (132, 160).

8. A control and communication system (10) according to any one of the preceding claims and further comprising a fold-back radio receiver (64) for generating a fold-back signal in response to the receipt of said first broadcast from said radio transmitter (24, 28), said central control unit (12) further comprising a fold-back input for receiving said fold-back signal.

9. A control and communication system (10) according to any one of the preceding claims, said first radio receiver (44) or each radio receiver (44) of said first plurality of radio receivers being connected to a respective display means for displaying a first piece of information in response to said first receiver signal being supplied to said respective display means.

10. A control and communication system according to claim 8 or 9, said first radio receiver (44) or each radio receiver (44) of said first plurality of radio receivers comprising a delay means for delaying the generation of said first receiver signal in response to the receipt of said first broadcast.

11. A control and communication system (10) according to any one of claims 8-10, said central control unit (12) further comprising a comparator means for comparing said first control signal and said fold-back signal so as to determine whether said fold-back radio receiver (64), and thereby each said radio receiver (44), has received said first broadcast correctly or incorrectly.

12. A control and communication system (10) according to claim 11, said central control unit (12) further comprising a storage means for storing said first control signal and a delay means for delaying the comparison of said first control signal and said fold-back signal for a predetermined period of time from the generation of said first control signal.

13. A control and communication system (10) according to any one of the preceding claims, said first control signal constituting a specific control signal of a first plurality of control signals representing respective states of said apparatus, device or system, and said first control signal being generated in response to the input, to said central control unit (12) through said first input thereof, of a specific input signal of a first plurality of input signals representing said states, said radio transmitter broadcasting a specific broadcast of a first plurality of broadcasts in response to the receipt of said specific control signal from said central control unit (12), said first radio receiver (44) or each radio receiver (44) of said first plurality of radio receivers generating a specific receiver signal of a first plurality of receiver signals in response to the receipt of said specific broadcast, and, in those cases where said system comprises a fold-back receiver (64), said fold-back radio receiver (64) generating a specific fold-back signal of a first plurality of fold-back signals in response to the receipt of said specific broadcast.

14. A control and communication system (10) according to any one of the preceding claims, said first radio receiver (44) or each of said first plurality of radio receivers comprising logical means for positively identifying any received broadcast as being either a broadcast intended for the radio receiver in question or a broadcast not intended for the radio receiver in question.

15. A control and communication system (10) according to claim 14, said central control unit (12) comprising an encryption means for encrypting said control signal or control signals output to said radio transmitter (24, 28), and each said radio receiver (44) comprising a decryption means for decrypting any electrical signals generated by the radio receiver (44) in question in response to the receipt of a broadcast.

16. A control and communication system (10) according to claim 15, said encryption means performing a static and/or dynamic encryption routine by employing a static and/or dynamic encryption key, a static and/or dynamic encryption algorithm, a combination of said control signal or control signals and a dynamic, time-varying function or a combination thereof, and said decryption means performing a corresponding static and/or dynamic decryption routine.

17. A control and communication system (10) according to any one of the preceding claims, said radio transmitter (24, 28) and said radio receiver(s) (44) forming part of a microwave communication system or an earth-satellite/satellite-earth communication system.

18. A control and communication system (10) according to any one of the preceding claims, said control signal or signals, and/or said receiver signal or signals, and/or said fold-back signal or signals being signals selected from the group consisting of AM, FM, PM, PCM, DTMF and CW modulated signals.

19. A control and communication system (10) according to any one of the preceding claims, said central control unit (12) further generating a second control signal representing a second state of said apparatus, device or system, said second control signal being output through said output of said central control unit (12) to said radio transmitter (24, 28) broadcasting a second broadcast in response to the receipt of said second control signal, said fold-back radio receiver (64), when comprised by said system, further receiving said second broadcast and generating an alternative fold-back signal which is transmitted to said central control unit (12), and said control and communication system (10) further comprising: a second radio receiver or a second plurality of radio receivers for receiving said second broadcast from said radio transmitter, said second radio receiver or each radio receiver of said second plurality of radio receivers being arranged at a respective switching means and generating a second receiver signal in response to the receipt of said second broadcast.

20. A control and communication system (10) according to claim 19, said second radio receiver or each radio receiver of said second plurality of radio receivers having characteristics equivalent to the characteristics of said first radio receiver (44) or first plurality of radio receivers as defined in any of the claims 1-18.

21. A control and communication system (10) according to any one of claims 1-20, said control signal(s) including a clock signal or other separately identifiable marker signal.

22. A control and communication system (10) according to any one of claims 4-21, said control signal(s) including information regarding the present kilowatt-hour rate.

23. A control and communication system (10) according to any one of the preceding claims, each said radio receiver (44) comprising a central processing unit controlling the operation of the radio receiver (44) in question and receiving additional control data from said central control unit (12) for controlling the operation of the central processing unit of the radio receiver in question.

24. A method for communicating with, and at least remotely controlling switching between an initial and a first state of, an apparatus, a device or a system,
said method comprising:
generating a first control signal representing a first state of said apparatus, device or system in response to the receipt of a first input signal representing said state,
inputting said first control signal to a radio transmitter (24, 28),
broadcasting a first broadcast from said radio transmitter (24, 28) in response to the receipt of said first control signal,
receiving said broadcast from said radio transmitter (24, 28) by means of a first radio receiver (44) or a first plurality of radio receivers, said first radio receiver (44) or each radio receiver (44) of said first plurality of radio receivers being arranged at a respective switching means (48), and
generating a first receiver signal at said first radio receiver (44) or at each radio receiver (44) of said first plurality of radio receivers in response to the receipt of said first broadcast, said receiver signal causing said switching by said switching means,
characterized in that said radio transmitter (24, 28) and each said radio receiver (44) are selected from the group consisting of:
radio transmitters and radio receivers of the NMT mobile telephone system,
radio transmitters and radio receivers of the GSM mobile telephone system, and
radio transmitters and radio receivers of a private, public, national or international paging system employing AM, FM, PM, PCM, DTMF or CW modulation and operating in the HF, VHF, UHF, SHF or EHF frequency range.

25. A method according to claim 24, said apparatus, device or system being selected from the group consisting of: electrical power supplying systems; display systems, including LCD displays, LED displays, lamp displays, TV monitors, light projectors and electromechanical displays; alarm systems, including acoustical and visual alarm systems; paging systems and devices; ventilation systems and devices; sprinkler systems and irrigation systems; credit card and debit card disabling systems; remote-control systems; illumination systems and devices; electric motors and electrically driven pumps for pumping gases or liquids; electromechanical lifting and moving systems; electrically operated valves, shutters and sluices regulating the flow of gases or liquids; windmills, including windmills generating electrical power and windmills powering water-pumping devices; household appliances; and heating systems and devices, including cooking appliances.

26. A method according to claim 25 for controlling an electrical power supplying system and of communicating information throughout said electrical power supplying system, said electrical power supplying system including at least one power-supplying source and an electrical power supplying network (40) receiving electrical power from said power-supplying source and supplying said electrical power to a plurality of electrical power consuming loads (50), each of said electrical power consuming loads (50) being connected to said network through a respective metering means (52) which comprises or is connected to said switching means (48), each radio receiver (44) of a said first plurality of radio receivers being arranged at a said respective metering means (52).

27. A method according to any one of claims 24-26, further comprising:
receiving said first broadcast from said radio transmitter (24, 28) by means of a fold-back radio receiver (64),

generating a fold-back signal by means of said fold-back radio receiver (64) in response to the receipt of said first broadcast, and

comparing said fold-back signal and said first control signal for determining whether said fold-back radio receiver (64), and thereby each said radio receiver (44), has received said broadcast correctly or incorrectly.

**Patentansprüche**

1. Steuerungs- und Nachrichtenübertragungssystem (10) zum Übertragen von Nachrichten an ein Gerät, eine Vorrichtung oder ein System und zumindest zum ferngesteuerten Umschalten zwischen einem ursprünglichen und einem ersten Zustand desselben,

wobei das Steuerungs- und Nachrichtenübertragungssystem (10) umfaßt:

eine zentrale Steuereinheit (12) zur Erzeugung eines ersten Steuersignals, welches den ersten Zustand des Gerätes, der Vorrichtung oder des Systems darstellt, wobei die zentrale Steuereinheit einen ersten Eingang zum Empfangen eines ersten Eingangssignals, welches den Zustand darstellt, und einen Ausgang zur Abgabe des ersten Steuersignals umfaßt;

einen Funksender (24, 28), welcher mit dem Ausgang der zentralen Steuereinheit (12) verbunden ist, zum Empfangen des ersten Steuersignals von der zentralen Steuereinheit (12) und zum Übertragen einer ersten Übertragung als Antwort auf den Empfang des ersten Steuersignals, und

einen ersten Funkempfänger (44) oder eine erste Vielzahl von Funkempfängern zum Empfangen der ersten Übertragung von dem Funksender (24, 28), wobei der erste Funkempfänger (44) oder jeder Funkempfänger (44) der ersten Vielzahl von Funkempfängern bei entsprechenden Schaltmitteln (48) angeordnet ist und ein erstes Empfangssignal als Antwort auf den Empfang der ersten Übertragung erzeugt, wobei das Empfangssignal das Umschalten durch die Schaltmittel (48) bewirkt,

dadurch gekennzeichnet, daß der Funksender (24, 28) und der erste Funkempfänger (44) oder jeder Funkempfänger (44) der ersten Vielzahl von Funkempfängern gewählt ist aus der Gruppe bestehend aus:

Funksendern und Funkempfängern des NMT-Mobiltelefon-Systems,

Funksendern und Funkempfängern des GSM-Mobiltelefon-Systems, und

Funksendern und Funkempfängern eines privaten, öffentlichen, nationalen oder internationalen Personenrufsystems, welches AM-, FM-, PM-, PCM-, DTMF- oder CW-Modulation verwendet und in dem HF-, VHF-, UHF-, SHF- oder EHF-Frequenzbereich arbeitet.

2. Steuerungs- und Nachrichtenübertragungssystem (10) nach Anspruch 1, wobei das Personenrufsystem aus der Gruppe bestehend aus dem dänischen OPS-System und dem europäische ERMES-System gewählt ist.

3. Steuerungs- und Nachrichtenübertragungssystem (10) nach Anspruch 1 oder 2, wobei das Gerät, die Vorrichtung oder das System gewählt ist aus der Gruppe beinhaltend: elektrische Stromversorgungssysteme; Anzeigesysteme, umfassend LCD-Anzeigen, LED-Anzeigen, Lampenanzeigen, TV-Bildschirme, Lichtprojektoren und elektromechanische Anzeigen; Alarmsysteme, umfassend akustische und visuelle Alarmsysteme; Personenrufsysteme und -vorrichtungen; Ventilationssysteme und -vorrichtungen; Sprinklersysteme und Beregnungssysteme; Kreditkarten- und Verrechnungskarten-Sperrsysteme, Fernsteuersysteme; Beleuchtungssysteme und -vorrichtungen; elektrische Motoren und elektrisch angetriebene Pumpen zum Pumpen von Gasen oder Flüssigkeiten; elektromechanische Hebe- und Antriebssysteme; elektrisch betriebene Ventile, Schieber und Schütze zur Regulierung des Stromes von Gasen oder Flüssigkeiten; Windmühlen, umfassend Windmühlen zur Erzeugung von elektrischer Energie und Windmühlen, welche Wasserpumpvorrichtungen antreiben; Haushaltsgeräte; und Heizungssysteme und -vorrichtungen, umfassend Kochgeräte.

4. Steuerungs- und Nachrichtenübertragungssystem (10) nach Anspruch 3 für ein elektrisches Stromversorgungssystem, wobei das elektrische Stromversorgungssystem wenigstens eine Stromversorgungsquelle und ein elektrisches Stromversorgungs-Netzwerk (40) umfaßt, welches elektrische Energie von der Stromversorgungsquelle erhält und die elektrische Energie einer Vielzahl von elektrische Energie verbrauchenden Lasten (50) zuführt, wobei jede der elektrische Energie verbrauchenden Lasten (50) mit dem Netzwerk (40) durch eine entsprechende Meßeinrichtung (52) verbunden ist, welche die Schalteinrichtung (48) umfaßt oder mit dieser verbunden ist, wobei jeder Funkempfänger (44) der ersten Vielzahl von Funkempfängern bei einer entsprechenden Meßeinrichtung (52) angeordnet ist und das erste Empfangssignal als Antwort auf den Empfang der ersten Übertragung erzeugt.

5. Steuerungs- und Nachrichtenübertragungssystem (10) nach einem der Ansprüche 1, 2 oder 3, wobei der erste Funkempfänger (44) oder jeder Funkempfänger (44) der ersten Vielzahl von Funkempfängern mit dem Gerät, der Vorrichtung oder dem System über die entsprechende Schalteinrichtung (48) zum Umschalten des Gerätes, der Vorrichtung oder des Systems von einem Normal- oder Standardzustand in einen ersten Zustand als Antwort auf das erste Empfangssignal, welches der entsprechenden Schalteinrichtung (48) zugeführt wird, verbunden ist.

6. Steuerungs- und Nachrichtenübertragungssystem (10) nach Anspruch 4, wobei jeder Funkempfänger (44) der ersten Vielzahl von Funkempfängern mit der entsprechenden Meßeinrichtung (52) zum Umschalten der entsprechenden Meßeinrichtung (52) von einem Normal- oder Standardtarif zu einem ersten Tarif als Antwort auf das erste Empfangssignal, welches der entsprechenden Meßeinrichtung zugeführt wird, verbunden ist.

7. Steuerungs- und Nachrichtenübertragungssystem (10) nach Anspruch 4 oder 6, wobei jeder Funkempfänger (44) der ersten Vielzahl von Funkempfängern mit einer entsprechenden Ein/Aus-Schalteinrichtung (132, 160) zum Empfangen des ersten Empfangssignals und zum Unterbrechen der Verbindung zu einer elektrische Energie verbrauchenden Last (50), welche verbrauchende Last (50) wenigstens ein Teil der elektrische Energie verbrauchenden Last darstellt, welche mit dem elektrischen Stromversorgungs-Netzwerk (40) durch die entsprechende Meßeinrichtung (52) verbunden ist, von dem elektrischen Stromversorgungs-Netzwerk als Antwort auf das erste Empfangssignal, welches der entsprechenden Ein/Aus-schalteinrichtung (132, 160) zugeführt wird, verbunden ist.

8. Steuerungs- und Nachrichtenübertragungssystem (10) nach einem der vorangehenden Ansprüche, welches weiters einen Fold-Back-Funkempfänger (64) zur Erzeugung eines Fold-Back-Signals als Antwort auf den Empfang der ersten Übertragung von dem Funksender (24, 28) umfaßt,
wobei die zentrale Steuereinheit (12) weiters einen Fold-Back-Eingang zum Empfangen des Fold-Back-Signals umfaßt.

9. Steuerungs- und Nachrichtenübertragungssystem (10) nach einem der vorangehenden Ansprüche, wobei der erste Funkempfänger (44) oder jeder Funkempfänger (44) der ersten Vielzahl von Funkempfängern mit einer entsprechenden Anzeigevorrichtung zum Anzeigen eines ersten Informationselementes als Antwort auf das erste Empfangssignal, welches der entsprechenden Anzeige zugeführt wird, verbunden ist.

10. Steuerungs- und Nachrichtenübertragungssystem nach Anspruch 8 oder 9, wobei der erste Funkempfänger (44) oder jeder Funkempfänger (44) der ersten Vielzahl von Funkempfängern Verzögerungsmittel zum Verzögern der Erzeugung des ersten Empfangssignals als Antwort auf den Empfang der ersten Übertragung umfaßt.

11. Steuerungs- und Nachrichtenübertragungssystem (10) nach einem der Ansprüche 8 bis 10, wobei die zentrale Steuereinheit (12) weiters einen Komparator zum Vergleichen des ersten Steuersignals und des Fold-Back-Signals umfaßt, um zu bestimmen, ob der Fold-Back-Funkempfänger (64), und dadurch jeder Funkempfänger (44), die erste Übertragung korrekt oder nicht korrekt empfangen hat.

12. Steuerungs- und Nachrichtenübertragungssystem (10) nach Anspruch 11, wobei die zentrale Steuereinheit (12) weiters einen Speicher zum Speichern des ersten Steuersignals und Verzögerungsmittel zum Verzögern des Vergleichs des ersten Steuersignals und des Fold-Back-Signals für eine vorbestimmte Zeitdauer ausgehend von der Erzeugung des ersten Steuersignals umfaßt.

13. Steuerungs- und Nachrichtenübertragungssystem (10) nach einem der vorangehenden Ansprüche,
wobei das erste Steuersignal ein spezielles Steuersignal einer ersten Vielzahl von Steuersignalen bildet, welche entsprechende Zustände des Gerätes, der Vorrichtung oder des Systems darstellen, und wobei das erste Steuersignal als Antwort auf den Eingang, zu der zentralen Steuereinheit (12) durch den ersten Eingang derselben, eines speziellen Eingangssignals einer ersten Vielzahl von Eingangssignalen, welche diese Zustände darstellen, erzeugt ist,
wobei der Funksender eine spezielle Übertragung einer ersten Vielzahl von Übertragungen als Antwort auf den Empfang des speziellen Steuersignals von der zentralen Steuereinheit (12) überträgt, wobei der erste Funkempfänger (44) oder jeder Funkempfänger (44) der ersten Vielzahl von Funkempfängern ein spezielles Empfangssignal einer ersten Vielzahl von Empfangssignalen als Antwort auf den Empfang der speziellen Übertragung erzeugt, und wobei in denjenigen Fällen, in welchen das System einen Fold-Back-Empfänger (64) aufweist, der Fold-Back-Funkempfänger (64) ein spezielles Fold-Back-Signal einer ersten Vielzahl von Fold-Back-Signalen als Antwort auf den Empfang der speziellen Übertragung erzeugt.

14. Steuerungs- und Nachrichtenübertragungssystem (10) nach einem der vorangehenden Ansprüche, wobei der erste Funkempfänger (44) oder jeder der ersten Vielzahl von Funkempfängern logische Mittel für eine positive Identifizierung einer jeden empfangenen Übertragung als entweder eine Übertragung, welche für den fraglichen Funkempfänger bestimmt ist, oder eine Übertragung, welche nicht für den fraglichen Funkempfänger bestimmt ist, aufweist.

15. Steuerungs- und Nachrichtenübertragungssystem (10) nach Anspruch 14, wobei die zentrale Steuereinheit (12) eine Verschlüsselungsvorrichtung zum Verschlüsseln des Steuersignals oder des Steuersignalausgangs zu dem Funksender (24, 28) umfaßt und wobei jeder der Funkempfänger (44) eine Entschlüsselungsvorrichtung zum Entschlüsseln jeglicher elektrischer Signale umfaßt, welche durch den fraglichen Funkempfänger (44) als Antwort auf den Empfang einer Übertragung erzeugt werden.

16. Steuerungs- und Nachrichtenübertragungssystem (10) nach Anspruch 15, wobei die Verschlüsselungsvorrichtung eine statische und/oder dynamische Verschlüsselungsroutine unter Verwendung eines statischen und/oder dynamischen Verschlüsselungsschlüssels, eines statischen und/oder dynamischen Verschlüsselungsalgorithmus, eine Kombination des Steuersignals oder der Steuersignale und eine dynamische, zeitlich veränderbare Funktion oder einer Kombination davon durchführt, und wobei die Entschlüsselungsvorrichtung eine entsprechende statische und/oder dynamische Entschlüsselungsroutine durchführt.

17. Steuerungs- und Nachrichtenübertragungssystem (10) nach einem der vorangehenden Ansprüche, wobei der Funksender (24, 28) und der (die) Funkempfänger (44) einen Bestandteil eines Mikrowellen-Nachrichtenübertragungssystems oder eines Erde-Satelliten/Satelliten-Erde-Nachrichtenübertragungssystems ausbilden.

18. Steuerungs- und Nachrichtenübertragungssystem (10) nach einem der vorangehenden Ansprüche, wobei das Steuersignal bzw. die -signale und/oder das Empfangssignal oder die -signale, und/oder das Fold-Back-Signal oder die -signale aus der Gruppe bestehend aus AM-, FM-, PM-, PCM-, DTMF- und CW-modulierten Signalen gewählt sind.

19. Steuerungs- und Nachrichtenübertragungssystem (10) nach einem der vorhergehenden Ansprüche, wobei die zentrale Steuereinheit (12) weiters ein zweites Steuersignal erzeugt, welches einen zweiten Zustand des Gerätes, der Vorrichtung oder des Systems darstellt,
wobei das zweite Steuersignal durch den Ausgang der zentralen Steuereinheit (12) zu dem Funksender (24, 28) abgegeben wird, welcher eine zweite Übertragung als Antwort auf den Empfang des zweiten Steuersignals überträgt,
wobei der Fold-Back-Funkempfänger (64), wenn er in dem System enthalten ist, weiters die zweite Übertragung empfängt und ein alternatives Fold-Back-Signal erzeugt, welches zu der zentralen Steuereinheit (12) übertragen wird, und
wobei das Steuerungs- und Nachrichtenübertragungssystem (10) weiters umfaßt:
einen zweiten Funkempfänger oder eine zweite Vielzahl von Funkempfängern zum Empfangen der zweiten Übertragung von dem Funksender, wobei der zweite Funkempfänger oder jeder Funkempfänger der zweiten Vielzahl von Funkempfängern bei entsprechenden Schalteinrichtungen angeordnet ist und ein zweites Empfangssignal als Antwort auf den Empfang der zweiten Übertragung erzeugt.

20. Steuerungs- und Nachrichtenübenragungssystem (10) nach Anspruch 19, wobei der zweite Funkempfänger oder jeder Funkempfänger der zweiten Vielzahl von Funkempfängern charakteristische Merkmale aufweist, welche zu den charakteristischen Merkmalen des ersten Funkempfängers (44) oder der ersten Vielzahl von Funkempfängern äquivalent sind, wie sie in einem der Ansprüche 1 bis 18 definiert sind.

21. Steuerungs- und Nachrichtenübertragungssystem (10) nach einem der Ansprüche 1 bis 20, wobei das Steuersignal bzw. die -signale ein Zeitgebersignal oder ein anderes, getrennt identifizierbares Markierungssignal umfassen.

22. Steuerungs- und Nachrichtenübertragungssystem (10) nach einem der Ansprüche 4 bis 21, wobei das Steuersignal bzw. die -signale Information betreffend den gegenwärtigen kWh-Tarif beinhaltet (beinhalten).

23. Steuerungs- und Nachrichtenübertragungssystem (10) nach einem der vorangehenden Ansprüche, wobei der Funkempfänger (44) eine zentrale Verarbeitungseinheit umfaßt, welche den Betrieb des fraglichen Funkempfängers (44) steuert und zusätzliche Steuerdaten von der zentralen Steuereinheit (12) zur Steuerung des Betriebes der zentralen Verarbeitungseinheit des fraglichen Funkempfängers empfängt.

24. Verfahren zum Übertragen von Nachrichten an ein Gerät, eine Vorrichtung oder ein System und zumindest zum ferngesteuerten Umschalten zwischen einen ursprünglichen und einem ersten Zustand desselben,
wobei das Verfahren umfaßt:
Erzeugen eines ersten Steuersignals, welches einen ersten Zustand des Gerätes, der Vorrichtung oder des Systems darstellt, als Antwort auf den Empfang eines ersten Eingabesignals, welches diesen Zustand darstellt,
Eingeben des ersten Steuersignals an einen Funksender (24, 28),
Übertragen einer ersten Übertragung von dem Funksender (24, 28) als Antwort auf den Empfang des ersten Steuersignals,
Empfangen der Übertragung von dem Funksender (24, 28) mit Hilfe eines ersten Funkempfängers (44) oder einer ersten Vielzahl von Funkempfängern, wobei der erste Funkempfänger (44) oder jeder Funkempfänger (44) der ersten Vielzahl von Funkempfängern bei einer entsprechenden Schalteinrichtung (48) angeordnet ist, und
Erzeugen eines ersten Empfangssignals bei dem ersten Funkempfänger (44) oder bei jedem Funkempfänger (44) der ersten Vielzahl von Funkempfängern als Antwort auf den Empfang der ersten Übertragung, wobei das Empfangssignal das Umschalten durch die Schalteinrichtung bewirkt,
dadurch gekennzeichret, daß der Funksender (24, 28) und jeder der Funkempfänger (44) gewählt sind aus der Gruppe bestehend aus:
Funksendern und Funkempfängern des NMT-Mobiltelefon-Systems, Funksendern und Funkempfängern des GSM-Mobiltelefcn-Systems, und
Funksendern und Funkempfängern eines privaten, öffentlichen, nationalen oder internationalen Personenrufsystems, welche AM-, FM-, PM-, PCM-, DTMF- oder CW-Modulation verwenden und in dem HF-, VHF-, UHF-, SHF- oder EHF-Frequenzbereich arbeiten.

25. Verfahren nach Anspruch 24, wobei das Gerät, die Vorrichtung oder das System gewählt sind aus der Gruppe beinhaltend: elektrische Stromversorgungssysteme; Anzeigesysteme, umfassend LCD-Anzeigen, LED-Anzeigen, Lampenanzeigen, TV-Bildschirme, Lichtprojektoren und elektromechanische Anzeigen; Alarmsysteme, umfassend akustische und visuelle Alarmsysteme; Personenrufsysteme und -vorrichtungen; Ventilationssysteme und -vorrichtungen; Sprinklersysteme und Beregnungssysteme; Kreditkarten- und Verrechnungskarten-Sperrsysteme, Fernsteuersysteme; Beleuchtungssysteme und -vorrichtungen; elektrische Motoren und elektrisch angetriebene Pumpen zum Pumpen von Gasen oder Flüssigkeiten; elektromechanische Hebe- und Antriebssysteme; elektrisch betriebene Ventile, Schieber und Schütze zur Regulierung des Stromes von Gasen oder Flüssigkeiten; Windmühlen, umfassend Windmühlen zur Erzeugung von elektrischer Energie und Windmühlen, welche Wasserpumpvorrichtungen antreiben; Haushaltsgeräte; und Heizungssysteme und -vorrichtungen, umfassend Kochgeräte.

26. Verfahren nach Anspruch 25 zur Steuerung eines elektrischen Stromversorgungssystems und zur Übertragung von Informationen durch das elektrische Stromversorgungssystem, wobei das elektrische Stromversorgungssystem wenigstens eine Stromversorgungsquelle und ein elektrisches Stromversorgungs-Netzwerk (40) umfaßt, welches elektrische Energie von der Stromversorgungsquelle empfängt und die elektrische Energie zu einer Vielzahl von elektrische Energie verbrauchenden Lasten (50) zuführt, wobei jede der elektrische Energie verbrauchenden Lasten (50) mit dem Netzwerk durch eine entsprechende Meßeinrichtung (52) verbunden ist, welche die Schalteinrichtung (48) umfaßt oder mit dieser verbunden ist, wobei jeder Funkempfänger (44) der ersten Vielzahl von Funkempfängern bei einer entsprechenden Meßeinrichtung (52) angeordnet ist.

27. Verfahren nach einem der Ansprüche 24 bis 26, welches weiters umfaßt:

Empfangen der ersten Übertragung von dem Funksender (24, 28) mit Hilfe eines Fold-Back-Funkempfängers (64),

Erzeugen eines Fold-Back-Signals mit Hilfe des Fold-Back-Funkempfängers (64) als Antwort auf den Empfang der ersten Übertragung, und

Vergleichen des Fold-Back-Signals und des ersten Steuersignals, um zu bestimmen, ob der Fold-Back-Funkempfänger (64), und dadurch jeder Funkempfänger (44), die Übertragung korrekt oder nicht korrekt empfangen hat.

## Revendications

1. Système de commande et de communication (10) permettant de communiquer avec un appareil, un dispositif ou un système et de réaliser au moins une commutation de commande à distance entre un état initial et un premier état de cet appareil, ce dispositif ou ce système,

ledit système de commande et de communication comprenant :

une unité centrale de commande (12) permettant de générer un premier signal de commande représentant ledit premier état d'un dit appareil, dispositif ou système, ladite unité centrale de commande comprenant une première entrée permettant de recevoir un premier signal d'entrée représentant ledit état et une sortie permettant d'émettre en sortie ledit premier signal de commande ;

un émetteur radio (24, 28) connecté à ladite sortie de ladite unité centrale de commande (12) permettant de recevoir ledit premier signal de commande provenant de ladite unité centrale de commande (12) et permettant de diffuser une première diffusion en réponse à la réception dudit premier signal de commande ; et

un premier récepteur radio (44) ou une première pluralité de récepteurs radio permettant de recevoir ladite première diffusion provenant dudit émetteur radio (24, 28), ledit premier récepteur radio (44) ou chaque récepteur radio (44) de ladite pluralité de récepteurs radio étant agencé au niveau d'un moyen de commutation respectif (48) et permettant de générer un premier signal de récepteur en réponse à la réception de ladite première diffusion, ledit signal de récepteur provoquant ladite commutation par ledit moyen de commutation (48),

caractérisé en ce que ledit émetteur radio (24, 28) et ledit premier récepteur radio (44) ou chaque récepteur radio (44) de ladite première pluralité de récepteurs radio sont choisis parmi le groupe comprenant :

des émetteurs radio et des récepteurs radio du système de téléphone mobile NMT ;

des émetteurs radio et des récepteurs radio du système de téléphone mobile GSM ; et

des émetteurs radio et des récepteurs radio d'un système de recherche de personne privé, public, national ou international qui utilise une modulation AM, FM, PM, PCM, DTMF ou CW et qui fonctionne dans la plage de fréquences HF, VHF, UHF, SHF ou EHF.

2. Système de commande et de communication (10) selon la revendication 1, ledit système de recherche de personne étant choisi parmi le groupe comprenant le système OPS danois et le système ERMES européen.

3. Système de commande et de communication (10) selon la revendication 1 ou 2, ledit appareil, dispositif ou système étant choisi parmi le groupe comprenant : des systèmes d'alimentation électrique ; des système d'affichage tels que des affichages LCD, des affichages DEL, des affichages à lampes, des moniteurs de TV, des projecteurs lumineux et des affichages électromécaniques ; des systèmes d'alarme tels que des systèmes d'alarme acoustiques et visuels ; des systèmes et dispositifs de recherche de personne ; des systèmes et dispositifs de ventilation ; des systèmes d'arrosage et d'irrigation ; des systèmes d'invalidation de carte de crédit et de carte de débit ; des systèmes de commande à distance ; des systèmes et dispositifs d'éclairage ; des moteurs électriques et des pompes entraînées électriquement permettant de pomper des gaz ou des liquides ; des systèmes de levage et de déplacement électromécaniques ; des vannes, des obturateurs et des canaux de décharge qui régulent l'écoulement de gaz ou de liquides, ces éléments étant commandés électriquement ; des éoliennes telles que des éoliennes générant de l'énergie électrique et des éoliennes alimentant des dispositifs de pompage d'eau ; des installations domestiques ; et des systèmes et dispositifs de chauffage tels que des installations de cuisson.

4. Système de commande et de communication (10) selon la revendication 3 pour un système d'alimentation électrique, ledit système d'alimentation électrique incluant au moins une source d'alimentation et un réseau d'alimentation électrique (40) qui reçoit de l'énergie électrique depuis la source d'alimentation et qui applique ladite énergie électrique à une pluralité de charges consommatrices d'énergie électrique (50), chacune desdites charges consommatrices d'énergie électrique (50) étant connectée audit réseau (40) par l'intermédiaire d'un moyen de mesure respectif (52) qui comprend ledit moyen de commutation (48) ou qui lui est connecté, chaque récepteur radio (44) de ladite première pluralité de récepteurs radio étant agencé au niveau dudit moyen de mesure respectif (52) et générant ledit premier signal de récepteur en réponse à la réception de ladite première diffusion.

5. Système de commande et de communication (10) selon l'une quelconque des revendications 1, 2 ou 3, ledit premier récepteur radio (44) ou chaque récepteur radio (44) de ladite première pluralité de récepteurs radio étant connecté à un dit appareil, dispositif ou système via ledit moyen de commutation respectif (48) permettant de commuter ledit appareil, dispositif ou système d'un état normal ou d'un état par défaut à un premier état en réponse audit premier signal de récepteur qui est appliqué audit moyen de commutation respectif (48).

6. Système de commande et de communication (10) selon la revendication 4, chaque récepteur radio (44) de ladite première pluralité de récepteurs radio étant connecté audit moyen de mesure respectif (52) pour commuter ledit moyen de mesure respectif (52) d'un tarif normal ou par défaut à un premier tarif en réponse audit premier signal de récepteur qui est appliqué audit moyen de mesure respectif.

7. Système de commande et de communication (10) selon la revendication 4 ou 6, chaque récepteur radio (44) de ladite première pluralité de récepteurs radio étant connecté à un moyen de commutation marche-/arrêt respectif (132, 160) permettant de recevoir ledit premier signal de récepteur et de déconnecter une charge consommatrice d'énergie électrique (50), laquelle charge consommatrice (50) constituant au moins une partie de ladite charge consommatrice d'énergie électrique connectée audit réseau d'alimentation électrique (40) par l'intermédiaire dudit moyen de mesure respectif (52), depuis ledit réseau d'alimentation électrique en réponse audit premier signal de récepteur qui est appliqué audit moyen de commutation marche/arrêt respectif (132, 160).

8. Système de commande et de communication (10) selon l'une quelconque des revendications précédentes, comprenant en outre un récepteur radio de retour (64) permettant de générer un signal de retour en réponse à la réception de ladite première diffusion provenant dudit premier émetteur radio (24, 28), ladite unité centrale de commande (12) comprenant en outre une entrée de retour permettant de recevoir ledit signal de retour.

9. Système de commande et de communication (10) selon l'une quelconque des revendications précédentes, ledit premier récepteur radio (44) ou chaque récepteur radio (44) de ladite première pluralité de récepteurs radio étant connecté à un moyen d'affichage respectif permettant d'afficher un premier élément d'information en réponse audit premier signal de récepteur qui est appliqué audit moyen d'affichage respectif.

10. Système de commande et de communication selon la revendication 8 ou 9, ledit premier récepteur radio (44) ou chaque récepteur radio (44) de ladite première pluralité de récepteurs radio comprenant un moyen de retard permettant de retarder la génération dudit premier signal de récepteur en réponse à la réception de ladite première diffusion.

11. Système de commande et de communication (10) selon l'une quelconque des revendications 8 à 10, ladite unité centrale de commande (12) comprenant en outre un moyen de comparateur permettant de comparer ledit premier signal de commande et ledit signal de retour de manière à déterminer si ledit récepteur radio de retour (64) et par conséquent chaque dit récepteur radio (44) ont reçu ladite première diffusion de façon correcte ou incorrecte.

12. Système de commande et de communication (10) selon la revendication 11, ladite unité centrale de commande (12) comprenant en outre un moyen de stockage permettant de stocker ledit premier signal de commande et un moyen de retard permettant de retarder la comparaison dudit premier signal de commande et dudit signal de retour pendant une période temporelle prédéterminée à partir de la génération dudit premier signal de commande.

13. Système de commande et de communication (10) selon l'une quelconque des revendications précédentes,

ledit premier signal de commande constituant un signal de commande spécifique d'une première pluralité de signaux de commande représentant des états respectifs dudit appareil, dispositif ou système et ledit premier signal de commande étant généré en réponse à l'entrée sur ladite unité centrale de commande (12) par l'intermédiaire de sa dite première entrée d'un signal d'entrée spécifique d'une première pluralité de signaux d'entrée représentant lesdits états ;

ledit émetteur radio diffusant une diffusion spécifique d'une première pluralité de diffusions en réponse à la réception dudit signal de commande spécifique provenant de ladite unité centrale de commande (12), ledit premier récepteur radio (44) ou chaque récepteur radio (44) de ladite première pluralité de récepteurs radio générant un signal de récepteur spécifique d'une première pluralité de signaux de récepteur en réponse à la réception de ladite diffusion spécifique et dans les cas où ledit système comprend un récepteur de retour (64),

ledit récepteur radio de retour (64) générant un signal de retour spécifique d'une première pluralité de signaux de retour en réponse à la réception de ladite diffusion spécifique.

14. Système de commande et de communication (10) selon l'une quelconque des revendications précédentes, ledit premier récepteur radio (44) ou chacun de ladite première pluralité de récepteurs radio comprenant un moyen logique permettant d'identifier positivement une quelconque diffusion reçue comme étant soit une diffusion destinée au récepteur radio en question soit une diffusion non destinée au récepteur radio en question.

15. Système de commande et de communication (10) selon la revendication 14, ladite unité centrale de commande (12) comprenant un moyen de cryptage permettant de crypter ledit signal de commande ou lesdits signaux de commande émis en sortie sur ledit émetteur radio (24, 28) et chaque dit récepteur radio (44) comprenant un moyen de décryptage permettant de décrypter de quelconques signaux électriques générés par le récepteur radio (44) en question en réponse à la réception d'une diffusion.

16. Système de commande et de communication (10) selon la revendication 15, ledit moyen de cryptage déroulant un sous-programme de cryptage statique et/ou dynamique en utilisant une clé de cryptage statique et/ou dynamique, un algorithme de cryptage statique et/ou dynamique, une combinaison dudit signal de commande ou desdits signaux de commande et une fonction dynamique variant en fonction du temps ou une combinaison de ceux-ci et ledit moyen de décryptage déroulant un sous-programme de décryptage statique et/ou dynamique correspondant.

17. Système de commande et de communication (10) selon l'une quelconque des revendications précédentes, ledit émetteur radio (24, 28) et ledit ou lesdits récepteur(s) radio (44) faisant partie d'un système de communication micro-ondes ou d'un système de communication terre-satellite/satellite-terre.

18. Système de commande et de communication (10) selon l'une quelconque des revendications précédentes, ledit ou lesdits signaux de commande et/ou ledit ou lesdits signaux de récepteur et/ou ledit ou lesdits signaux de retour étant des signaux choisis parmi le groupe comprenant des signaux modulés AM, FM, PM, PCM, DTMF et CW.

19. Système de commande et de communication (10) selon l'une quelconque des revendications précédentes,

ladite unité centrale de commande (12) générant en outre un second signal de commande représentant un second état dudit appareil, dispositif ou système,

ledit second signal de commande étant émis en sortie par l'intermédiaire de ladite sortie de ladite unité centrale de commande (12) sur ledit émetteur radio (24, 28) qui diffuse une seconde diffusion en réponse à la réception dudit second signal de commande,

ledit récepteur radio de retour (64), lorsqu'il est constitué par ledit système, recevant en outre ladite seconde diffusion et générant un signal de retour alternatif qui est transmis à ladite unité centrale de commande (12) ; et

ledit système de commande et de communication (10) comprenant en outre :

un second récepteur radio ou une seconde pluralité de récepteurs radio permettant de recevoir ladite seconde diffusion provenant dudit émetteur radio, ledit second récepteur radio ou chaque récepteur radio de ladite seconde pluralité de récepteurs radio étant agencé au niveau d'un moyen de commutation respectif et générant un second signal de récepteur en réponse à la réception de ladite seconde diffusion.

**20.** Système de commande et de communication (10) selon la revendication 19, ledit second récepteur radio ou chaque récepteur radio de ladite seconde pluralité de récepteurs radio présentant des caractéristiques équivalentes aux caractéristiques dudit premier récepteur radio (44) ou d'une première pluralité de récepteurs radio, tel que défini dans l'une quelconque des revendications 1 à 18.

**21.** Système de commande et de communication (10) selon l'une quelconque des revendications 1 à 20, ledit ou lesdits signaux de commande incluant un signal d'horloge ou un autre signal de repérage identifiable séparément.

**22.** Système de commande et de communication (10) selon l'une quelconque des revendications 4 à 21, ledit ou lesdits signaux de commande incluant une information concernant la consommation courante en kilowatts-heure.

**23.** Système de commande et de communication (10) selon l'une quelconque des revendications précédentes, chaque dit récepteur radio (44) comprenant une unité centrale de traitement qui commande le fonctionnement du récepteur radio (44) en question et qui reçoit des données de commande supplémentaires provenant de ladite unité centrale de commande (12) pour commander le fonctionnement de l'unité centrale de traitement du récepteur radio en question.

**24.** Procédé permettant de communiquer avec un appareil, un dispositif ou un système et de réaliser au moins une commutation de commande à distance entre un état initial et un premier état de cet appareil, ce dispositif ou ce système,

ledit procédé comprenant :

la génération d'un premier signal de commande représentant un premier état dudit appareil, dispositif ou système en réponse à la réception d'un premier signal d'entrée représentant ledit état ;

l'entrée dudit premier signal de commande sur un émetteur radio (24, 28) ;

la diffusion d'une première diffusion depuis ledit émetteur radio (24, 28) en réponse à la réception dudit premier signal de commande ;

la réception de ladite diffusion provenant dudit émetteur radio (24, 28) au moyen d'un premier récepteur radio (44) ou d'une première pluralité de récepteurs radio, ledit premier récepteur radio (44) ou chaque récepteur radio (44) de ladite première pluralité de récepteurs radio étant agencé au niveau d'un moyen de commutation respectif (48) ; et

la génération d'un premier signal de récepteur au niveau dudit premier récepteur radio (44) ou au niveau de chaque récepteur radio (44) de ladite première pluralité de récepteurs radio en réponse à la réception de ladite première diffusion, ledit signal de récepteur provoquant ladite commutation par ledit moyen de commutation,

caractérisé en ce que ledit émetteur radio (24, 28) et chaque dit récepteur radio (44) sont choisis parmi le groupe comprenant :

des émetteurs radio et des récepteurs radio du système de téléphone mobile NMT ;

des émetteurs radio et des récepteurs radio du système de téléphone mobile GSM ; et

des émetteurs radio et des récepteurs radio d'un système de recherche de personne privé, public, national ou international qui utilise une modulation AM, FM, PM, PCM, DTMF ou CW et qui fonctionne dans la plage de fréquences HF, VHF, UHF, SHF ou EHF.

**25.** Procédé selon la revendication 24, ledit appareil, dispositif ou système étant choisi parmi le groupe comprenant : des systèmes d'alimentation électrique ; des système d'affichage tels que des affichages LCD, des affichages DEL, des affichages à lampes, des moniteurs de TV, des projecteurs lumineux et des affichages électromécaniques ; des systèmes d'alarme tels que des systèmes d'alarme acoustiques et visuels ; des systèmes et dispositifs de recherche de personne ; des systèmes et dispositifs de ventilation ; des systèmes d'arrosage et d'irrigation ; des systèmes d'invalidation de carte de crédit et de carte de débit ; des systèmes de commande à distance ; des systèmes et dispositifs d'éclairage ; des moteurs électriques et des pompes entraînées électriquement permettant de pomper des gaz ou des liquides ; des systèmes de levage et de déplacement électromécaniques ; des vannes, des obturateurs et des canaux de décharge qui régulent l'écoulement de gaz ou de liquides, ces éléments étant commandés électriquement ; des éoliennes telles que des éoliennes générant de l'énergie électrique et des éoliennes alimentant des dispositifs de pompage d'eau ; des installations domestiques ; et des systèmes et dispositifs de chauffage tels que des installations de cuisson.

**26.** Procédé selon la revendication 25 permettant de commander un système d'alimentation électrique et de communiquer une information par l'intermédiaire dudit système d'alimentation électrique, ledit système d'alimentation électrique incluant au moins une source d'alimentation et un réseau d'alimentation électrique (40) qui reçoit de l'énergie électrique provenant de ladite source d'alimentation et qui applique ladite énergie électrique à une pluralité de charges consommatrices d'énergie électrique (50), chacune desdites charges consommatrices d'énergie électrique (50) étant connectée audit réseau par l'intermédiaire d'un moyen de mesure respectif (52) qui comprend ledit moyen de commutation (48) ou qui lui est connecté, chaque récepteur radio (44) d'une dite première pluralité de récepteurs radio étant agencé au niveau dudit moyen de mesure respectif (52).

27. Procédé selon l'une quelconque des revendications 24 à 26, comprenant en outre :

la réception de ladite première diffusion provenant dudit émetteur radio (24, 28) au moyen d'un récepteur radio de retour (64) ;

la génération d'un signal de retour au moyen dudit récepteur radio de retour (64) en réponse à la réception de ladite première diffusion ; et

la comparaison dudit signal de retour et dudit premier signal de commande pour déterminer si oui ou non ledit récepteur radio de retour (64) et par conséquent chaque dit récepteur radio (44) ont reçu ladite diffusion de façon correcte ou incorrecte.

# Fig. 1

Fig. 2

Fig. 3

EP 0 515 461 B1

Fig. 4

EP 0 515 461 B1

## Fig. 5

## Fig. 6

32

# Fig. 7